# EUROPEAN PATENT APPLICATION

(11) **EP 4 142 315 A1**
(43) Date of publication of application: **01.03.2023**
(21) Application number: 21804578.9
(22) Date of filing: 07.05.2021
(51) Int. Cl.: H04W 4/06, H04W 76/12

(54) **COMMUNICATION METHOD AND DEVICE**

(30) Priority: 11.05.2020 CN 202010393880; 17.09.2020 CN 202010983823
(71) Applicant: Huawei Technologies Co., Ltd., Longgang District, Shenzhen, Guangdong 518129 (CN)
(72) Inventor: LI, Meng, Shenzhen, Guangdong 518129 (CN); YANG, Yanmei, Shenzhen, Guangdong 518129 (CN); YING, Jiangwei, Shenzhen, Guangdong 518129 (CN)
(74) Representative: Huawei European IPR
(86) International application number: PCT/CN2021/092230
(87) International publication number: WO 2021/227965

(57) **Abstract**

This application provides a communication method and apparatus, to avoid a resource waste caused by establishing a multicast data transmission tunnel per UPF network element, and improve data transmission efficiency. The communication method and apparatus may be used in systems such as a 5G system and a V2X system. The method includes: After receiving, through a first unicast session, a request message for adding a first terminal to a multicast group, a first session management network element sends second information based on first information. The second information is for requesting a first user plane network element to send multicast data not through the first unicast session or not to send first signaling to a data network, or requesting a second session management network element not to send second signaling to a data providing network element. The first signaling is for establishing a second tunnel used by the data network to send the multicast data to the first user plane network element, the second signaling is for establishing a third tunnel used by the data providing network element to send the multicast data to the first user plane network element, and the first user plane network element is a user plane network element corresponding to the first unicast session.

## Description

### COMMUNICATION METHOD AND APPARATUS

This application claims priority to Chinese Patent Application No. 202010393880.9, filed with the China National Intellectual Property Administration on May 11, 2020 and entitled "COMMUNICATION METHOD AND APPARATUS", and to Chinese Patent Application No. 202010983823.6, filed with the China National Intellectual Property Administration on September 17, 2020 and entitled "COMMUNICATION METHOD AND APPARATUS", which are incorporated herein by reference in their entireties.

### TECHNICAL FIELD

This application relates to the communications field, and in particular, to a communication method and apparatus.

### BACKGROUND

Currently, a terminal device within coverage of a radio access network (radio access network, RAN) device may request, through a protocol data unit (protocol data unit, PDU) session (PDU session) procedure, to join a multicast session. Specifically, the terminal device sends a multicast session join request, for example, an internet group management protocol (internet group management protocol, IGMP) join (IGMP join) request, to a PDU session anchor (PDU session anchor, PSA) network element, for example, a user plane function (user plane function, UPF) network element. Correspondingly, the PSA determines, based on the multicast session join request, whether a multicast tunnel from a data network (data network, DN) to the PSA exists. If the multicast tunnel does not exist, the PSA initiates a multicast tunnel establishment procedure to the DN.

However, the foregoing determining operation is performed per UPF (per UPF) network element. As a result, only whether a multicast tunnel to the UPF network element exists is considered, but whether a multicast tunnel from the DN to the access network device via another UPF network element has been established is not considered. As a result, a plurality of multicast tunnels from the same DN to the same access network device respectively via different UPF network elements may be established, and consequently the DN repeatedly sends same multicast data to the same access network device through different multicast tunnels. This causes a huge transmission resource waste and low data transmission efficiency.

### SUMMARY

Embodiments of this application provide a communication method and apparatus, to avoid a transmission resource waste caused by determining per UPF whether to establish a multicast tunnel, and improve efficiency of transmitting multicast data.

To achieve the foregoing objective, this application uses the following technical solutions.

According to a first aspect, a communication method is provided. The method includes: A first session management network element receives a request message through a first unicast session. The request message is for adding a first terminal to a multicast group. Then, the first session management network element sends second information based on first information. The second information is for requesting a first user plane network element to send multicast data not through the first unicast session. Alternatively, the second information is for requesting a first user plane network element not to send first signaling to a data network, the first signaling is for establishing a second tunnel, and the second tunnel is used by the data network to send multicast data to the first user plane network element. Alternatively, the second information is for requesting a second session management network element not to send second signaling to a data providing network element, the second signaling is for establishing a third tunnel, and the third tunnel is used by the data providing network element to send multicast data to a first user plane network element. The first user plane network element is a user plane network element corresponding to the first unicast session.

Based on the communication method in the first aspect, after receiving the request message for adding the first terminal to a multicast session, the first session management network element may send the second information based on the first information, where the second information is for requesting the first user plane network element to send the multicast data to the first terminal not through the first unicast session, requesting the first user plane network element not to establish the second tunnel for sending the multicast data from the data network to the first user plane network element, or requesting the second session management network element not to establish the third tunnel for sending the multicast data from the data providing network element to the first user plane network element. In this way, in a scenario in which an access network device of the first terminal already has a tunnel for receiving the multicast data, the first user plane network element does not repeatedly send the multicast data to the access network device, or does not establish a tunnel used by the first user plane network element to receive the multicast data. This can resolve a problem that same multicast data is repeatedly transmitted through different network paths because the multicast data is separately forwarded by a plurality of user plane network elements, so that transmission resources are saved, and data transmission efficiency is improved.

In a possible design solution, the second information is for requesting to send the multicast data not through the first unicast session. Correspondingly, the first information may include at least one of the following: first tunnel information, first capability information, or a first rule. The first tunnel information indicates that an access network device of the first terminal has a tunnel for receiving the multicast data. The first capability information indicates that the access network device of the first terminal supports multicast. The first rule indicates that the first unicast session is for transmitting the multicast data. In this way, the first user plane network element may not repeatedly send the multicast data to the access network device, to save the data transmission resources and improve the data transmission efficiency.

Optionally, the communication method in the first aspect may further include: The first session management network element sends third information to the first user plane network element after the first terminal is handed over to a target access network device, where the third information is used by the first user plane network element to send the multicast data to the target access network device. The target access network device does not support multicast, or does not have a tunnel for receiving the multicast data. In this way, a transmission tunnel used by the target access network device to receive the multicast data from the first user plane network element can be quickly established, to ensure that receiving of the multicast data by the first terminal is not interrupted by a cell handover. This improves transmission reliability of the multicast data.

In another possible design solution, the second information is for requesting the first user plane network element not to send the first signaling to the data network. Correspondingly, the first information may include at least one of the following: first tunnel information, second tunnel information, second capability information, third tunnel information, or a first rule. The first tunnel information indicates that an access network device of the first terminal has a tunnel for receiving the multicast data. The second tunnel information indicates that the data network has a tunnel for sending the multicast data to the first user plane network element. The second capability information indicates that the data network does not support multicast. The third tunnel information indicates that the data providing network element has a tunnel for sending the multicast data to the first user plane network element. The first rule indicates that the first unicast session is for transmitting the multicast data. In this way, a tunnel used by the first user plane network element to receive the multicast data may not be established, to prevent the data network from repeatedly sending the same multicast data to different user plane network elements. This saves the data transmission resources and improves the data transmission efficiency.

Optionally, the communication method in the first aspect may further include: The first session management network element sends fourth information to the first user plane network element after the first terminal is handed over to a target access network device, where the fourth information is for requesting the first user plane network element to send the first signaling to the data network. The target access network device does not support multicast, or does not have the second tunnel. In this way, a transmission tunnel used by the target access network device to receive the multicast data from the first user plane network element can be quickly established, to ensure that receiving of the multicast data by the first terminal is not interrupted by a cell handover. This improves transmission reliability of the multicast data.

In still another possible design solution, the second information is for requesting the second session management network element not to send the second signaling to the data providing network element. Correspondingly, the first information may include at least one of the following: first tunnel information, first capability information, second tunnel information, third tunnel information, third capability information, or a first rule. The first tunnel information indicates that an access network device of the first terminal has a tunnel for receiving the multicast data. The first capability information is for requesting that the access network device of the first terminal supports multicast. The second tunnel information indicates that the data network has a tunnel for sending the multicast data to the first user plane network element. The third tunnel information indicates that the data providing network element has a tunnel for sending the multicast data to the first user plane network element. The third capability information indicates that the data providing network element does not support multicast. The first rule is for requesting that the first unicast session is for transmitting the multicast data. In this way, the first user plane network element does not receive multicast data that has been sent to the access network device through another tunnel, to save the data transmission resources and improve the data transmission efficiency.

Optionally, the communication method in the first aspect may further include: The first session management network element sends fifth information to the second session management network element after the first terminal is handed over to a target access network device, where the fifth information is used by the second session management network element to request a second user plane network element corresponding to the second session management network element to send the multicast data to the first user plane network element or the target access network device. The target access network device does not support multicast, or does not have a tunnel for receiving the multicast data. In this way, a transmission tunnel for the multicast data and from the second user plane network element to the first user plane network element or the target access network device can be quickly established, to ensure that receiving of the multicast data by the first terminal is not interrupted by a cell handover. This improves transmission reliability of the multicast data.

Further, the fifth information may include tunnel information on a target access network device side or tunnel information on a first user plane network element side. The tunnel information on the target access network device side is for establishing the transmission tunnel used by the target access network device to receive the multicast data from the second user plane network element, and the tunnel information on the first user plane network element side is for establishing the transmission tunnel used by the first user plane network element to receive the multicast data from the second user plane network element.

Optionally, the communication method in the first aspect may further include: The first session management network element receives the tunnel information on the target access network device side from a mobility management network element corresponding to the first terminal or a centralized storage network element.

Optionally, the communication method in the first aspect may further include: The first session management network element receives the tunnel information on the first user plane network element side from the first user plane network element or a centralized storage network element.

It should be noted that, in correspondence with the foregoing solution, in a possible design solution, after receiving a request message for adding a first terminal to a multicast session, a first session management network element may alternatively send seventh information based on first information. The seventh information is for requesting a first user plane network element to send multicast data, for example, through a first unicast session (by reusing a unicast tunnel) or not through a first unicast session (by establishing a new multicast tunnel or another unicast tunnel). Alternatively, the seventh information is for requesting a first user plane network element to send first signaling to a data network, the first signaling is for establishing a second tunnel, and the second tunnel is used by the data network to send multicast data to the first user plane network element. Alternatively, the seventh information is for requesting a second session management network element to send second signaling to a data providing network element, the second signaling is for establishing a third tunnel, and the third tunnel is used by the data providing network element to send multicast data to a first user plane network element. The first user plane network element is a user plane network element corresponding to the first unicast session. In this design solution, the first information may need to include one or more of the following information: first tunnel information, first capability information, second tunnel information, second capability information, third tunnel information, third capability information, or a first rule. The first tunnel information indicates that an access network device of the first terminal does not have a tunnel for receiving the multicast data. The first capability information indicates that the access network device of the first terminal does not support multicast. The second tunnel information indicates that the data network does not have a tunnel for sending the multicast data to the first user plane network element. The second capability information indicates that the data network supports multicast. The third tunnel information indicates that the data providing network element does not have a tunnel for sending the multicast data to the first user plane network element. The third capability information is for requesting that the data providing network element supports multicast. The first rule indicates that the first unicast session is for transmitting the multicast data.

In this embodiment of this application, the first session management network element may obtain the first information from one or more network elements in one or more of the following manners: The first session management network element obtains at least one of the following from a policy control network element or the centralized storage network element: the first tunnel information, the first capability information, the second tunnel information, the second capability information, the third tunnel information, the third capability information, or the first rule. The first session management network element obtains at least one of the following from the second session management network element: the first tunnel information, the first capability information, the second tunnel information, or the second capability information. The first session management network element obtains at least one of the following from the first user plane network element: the first tunnel information, the first capability information, the second tunnel information, the second capability information, the third tunnel information, the third capability information, or the first rule. The first session management network element obtains at least one of the following from the access network device: the first tunnel information or the first capability information. A source and an obtaining manner of the first information are not specifically limited in this application.

According to a second aspect, a communication apparatus is provided. The apparatus includes a processing module and a transceiver module. The transceiver module is configured to receive a request message through a first unicast session, where the request message is for adding a first terminal to a multicast group. The processing module is configured to control, based on first information, the transceiver module to send second information. The second information is for requesting a first user plane network element to send multicast data not through the first unicast session. Alternatively, the second information is for requesting a first user plane network element not to send first signaling to a data network, the first signaling is for establishing a second tunnel, and the second tunnel is used by the data network to send multicast data to the first user plane network element. Alternatively, the second information is for requesting a second session management network element not to send second signaling to a data providing network element, the second signaling is for establishing a third tunnel, and the third tunnel is used by the data providing network element to send multicast data to a first user plane network element. The first user plane network element is a user plane network element corresponding to the first unicast session.

In a possible design solution, the second information is for requesting to send the multicast data not through the first unicast session, and the first information includes at least one of the following: first tunnel information, first capability information, or a first rule. The first tunnel information indicates that an access network device of the first terminal has a tunnel for receiving the multicast data. The first capability information indicates that the access network device of the first terminal supports multicast. The first rule indicates that the first unicast session is for transmitting the multicast data.

Optionally, the transceiver module is further configured to send third information to the first user plane network element after the first terminal is handed over to a target access network device, where the third information is used by the first user plane network element to send the multicast data to the target access network device. The target access network device does not support multicast, or does not have a tunnel for receiving the multicast data.

In another possible design solution, the second information is for requesting the first user plane network element not to send the first signaling to the data network, and the first information includes at least one of the following: first tunnel information, second tunnel information, second capability information, third tunnel information, or a first rule. The first tunnel information indicates that an access network device of the first terminal has a tunnel for receiving the multicast data. The second tunnel information indicates that the data network has a tunnel for sending the multicast data to the first user plane network element. The second capability information indicates that the data network does not support multicast. The third tunnel information indicates that the data providing network element has a tunnel for sending the multicast data to the first user plane network element. The first rule indicates that the first unicast session is for transmitting the multicast data.

Optionally, the transceiver module is further configured to send fourth information to the first user plane network element after the first terminal is handed over to a target access network device, where the fourth information is for requesting the first user plane network element to send the first signaling to the data network. The target access network device does not support multicast, or does not have the second tunnel.

In still another possible design solution, the second information is for requesting the second session management network element not to send the second signaling to the data providing network element, and the first information includes at least one of the following: first tunnel information, first capability information, second tunnel information, third tunnel information, third capability information, or a first rule. The first tunnel information indicates that an access network device of the first terminal has a tunnel for receiving the multicast data. The first capability information indicates that the access network device of the first terminal supports multicast. The second tunnel information indicates that the data network has a tunnel for sending the multicast data to the first user plane network element. The third tunnel information indicates that the data providing network element has a tunnel for sending the multicast data to the first user plane network element. The third capability information indicates that the data providing network element does not support multicast. The first rule indicates that the first unicast session is for transmitting the multicast data.

Optionally, the transceiver module is further configured to send fifth information to the second session management network element after the first terminal is handed over to a target access network device, where the fifth information is used by the second session management network element to request a second user plane network element corresponding to the second session management network element to send the multicast data to the first user plane network element or the target access network device. The target access network device does not support multicast, or does not have a tunnel for receiving the multicast data.

Further, the fifth information may include tunnel information on a target access network device side or tunnel information on a first user plane network element side.

Optionally, the transceiver module is further configured to receive the tunnel information on the target access network device side from a mobility management network element for the first terminal or a centralized storage network element.

Optionally, the transceiver module is further configured to receive the tunnel information on the first user plane network element side from the first user plane network element or a centralized storage network element.

It should be noted that, in correspondence with the foregoing solution, in another possible design solution, after the transceiver module receives a request message for adding a first terminal to a multicast session, the processing module may alternatively be configured to control, based on first information, the transceiver module to send seventh information. The seventh information is for requesting a first user plane network element to send multicast data, for example, through a first unicast session or not through a first unicast session. Alternatively, the seventh information is for requesting a first user plane network element to send first signaling to a data network, the first signaling is for establishing a second tunnel, and the second tunnel is used by the data network to send multicast data to the first user plane network element. Alternatively, the seventh information is for requesting a second session management network element to send second signaling to a data providing network element, the second signaling is for establishing a third tunnel, and the third tunnel is used by the data providing network element to send multicast data to a first user plane network element. The first user plane network element is a user plane network element corresponding to the first unicast session. In this design solution, the first information may need to include one or more of the following information: first tunnel information, first capability information, second tunnel information, second capability information, third tunnel information, third capability information, or a first rule. The first tunnel information indicates that an access network device of the first terminal does not have a tunnel for receiving the multicast data. The first capability information indicates that the access network device of the first terminal does not support multicast. The second tunnel information indicates that the data network does not have a tunnel for sending the multicast data to the first user plane network element. The second capability information indicates that the data network supports multicast. The third tunnel information indicates that the data providing network element does not have a tunnel for sending the multicast data to the first user plane network element. The third capability information is for requesting that the data providing network element supports multicast. The first rule indicates that the first unicast session is for transmitting the multicast data.

It should be noted that the transceiver module in the second aspect may alternatively be configured into separate modules, for example, configured into a receiving module and a sending module. The receiving module is configured to perform a receiving function, and the sending module is configured to perform a sending function. An implementation of the transceiver module is not specifically limited in this application.

Optionally, the communication apparatus in the second aspect may further include a storage module, and the storage module stores a program or instructions. When the processing module executes the program or the instructions, the communication apparatus in the second aspect is enabled to perform the communication method in the first aspect.

It should be noted that the communication apparatus in the second aspect may be a session management network element, for example, an SMF network element, or may be a chip (system) or another part or component that can be configured in the session management network element. This is not limited in this application.

In addition, for technical effects of the communication apparatus in the second aspect, refer to the technical effects of the communication method in the first aspect. Details are not described herein again.

According to a third aspect, a communication method is provided. The method includes: A first session management network element determines that a first condition is satisfied, and sends a first message to a first network element. The first condition includes one or more of the following: A first terminal device is in idle mode; a second unicast session is deactivated, where the second unicast session is associated with a multicast session that a first terminal device joins; a serving access network device of a first terminal device does not support a multicast mode; or the first session management network element determines to transmit multicast data in a unicast mode. The first message is for requesting to establish a fourth tunnel, or is for requesting to transmit the multicast data through a fourth tunnel, where the fourth tunnel is used by a second user plane network element to send the multicast data to a first user plane network element.

The multicast data may satisfy one or more of the following conditions: The multicast data is multicast data corresponding to a multicast group that the first terminal device requests to join, the multicast data is multicast data that is being received by the first terminal device, the multicast data is data received by the first terminal device through the second user plane network element, the multicast data is multicast data sent by the serving access network device of the first terminal device to the first terminal device by using the second user plane network element as an anchor user plane network element, or the multicast data is data on the multicast session that the first terminal device requests to receive.

The first user plane network element may be defined by one or more of the following: The first user plane network element is an anchor user plane network element of a unicast PDU session of the first terminal device, where the unicast PDU session corresponds to the multicast session that the first terminal device has joined; the first user plane network element is an anchor user plane network element of a unicast PDU session for sending the multicast data by the first terminal device; or the first user plane network element is configured to provide the multicast data for the first terminal device.

Based on the method in the third aspect, when the first terminal device cannot receive the multicast data in time, if the first condition is satisfied, the first session management network element may request the first network element to establish or activate the fourth tunnel, so that the first user plane network element replaces the first terminal device to receive the multicast data from the second user plane network element, buffers the multicast data, and forwards the multicast data to the first terminal device when the first terminal device can receive the multicast data. In this way, the second user plane network element and another terminal device that joins the multicast session transmit the multicast data without waiting for the first terminal device to be capable of receiving the multicast data. This can greatly reduce a delay in receiving the multicast data by the another terminal device, to improve efficiency of transmitting the multicast data. In addition, the first terminal device may receive the multicast data from the first user plane network element when the first terminal device can receive the multicast data, to ensure reliability of receiving the multicast data by the first terminal device. This balances both overall efficiency of transmitting the multicast data and reliability of receiving the multicast data by a part of terminal devices. In addition, resource overheads for buffering the multicast data by a multicast user plane network element to wait for a part of terminal devices to restore a capability of receiving the multicast data can be reduced, so that load of the multicast user plane network element can be reduced, thereby further improving efficiency of transmitting the multicast data.

Optionally, that the first session management network element determines to transmit multicast data in a unicast mode may include: If a quantity of terminal devices that have accessed the serving access network device of the first terminal device and have joined the multicast session is less than or equal to a quantity threshold, the first session management network element determines to transmit the multicast data in the unicast mode.

In a possible design solution, the first network element may be a second session management network element, the first message may include fourth tunnel information, and the fourth tunnel information is for requesting the second session management network element to establish the fourth tunnel.

In another possible design solution, the first network element may be the first user plane network element, the first user plane network element is a unicast user plane network element corresponding to the first session management network element, the first message may include a second rule, the second rule is used by the first user plane network element to receive the multicast data from a second user plane network element, and the second user plane network element is a multicast user plane network element corresponding to the multicast session.

Further, the method in the third aspect may include: The first session management network element receives a third message from the first user plane network element, where the third message is for notifying that the first user plane network element has received the multicast data. The first session management network element sends a fourth message, where the fourth message is for paging the first terminal device or activating a user plane connection for the second unicast session.

According to a fourth aspect, a communication method is provided. The method includes: A second session management network element receives a first message from a first session management network element. The second session management network element establishes, based on the first message, a fourth tunnel used by a second user plane network element to send multicast data to a first user plane network element, or the second session management network element requests, based on the first message, a second user plane network element to send multicast data to a first user plane network element through a fourth tunnel. The first user plane network element is a unicast user plane network element corresponding to the first session management network element, and the second user plane network element is a multicast user plane network element corresponding to the second session management network element.

The multicast data may satisfy one or more of the following conditions: The multicast data is multicast data corresponding to a multicast group that a first terminal device requests to join, the multicast data is multicast data that is being received by a first terminal device, the multicast data is data received by a first terminal device through the second user plane network element, the multicast data is multicast data sent by a serving access network device of a first terminal device to the first terminal device by using the second user plane network element as an anchor user plane network element, or the multicast data is data on a multicast session that a first terminal device requests to receive.

The first user plane network element may be defined by one or more of the following: The first user plane network element is an anchor user plane network element of a unicast PDU session of the first terminal device, where the unicast PDU session corresponds to the multicast session that the first terminal device requests to join; the first user plane network element is an anchor user plane network element of a unicast PDU session for sending the multicast data by the first terminal device; or the first user plane network element is configured to provide the multicast data for the first terminal device.

In a possible design solution, the first message may include fourth tunnel and the fourth tunnel information is for requesting the second session management network element to establish the fourth tunnel.

Optionally, the method in the fourth aspect may further include: The second session management network element sends a second message to the second user plane network element, where the second message includes the fourth tunnel information.

Further, the second message may include a third rule, and the third rule is for configuring the second user plane network element to send the multicast data to the first user plane network element.

In addition, for technical effects of the communication method in the fourth aspect, refer to the technical effects of the communication method in the third aspect. Details are not described herein again.

According to a fifth aspect, a communication apparatus is provided. The apparatus includes a processing module and a transceiver module. The processing module is configured to determine that a first condition is satisfied. The first condition includes one or more of the following: A first terminal device is in idle mode; a second unicast session is deactivated, where the second unicast session is associated with a multicast session that a first terminal device joins; a serving access network device of a first terminal device does not support a multicast mode; or the communication apparatus determines to transmit multicast data in a unicast mode. The transceiver module is configured to send a first message to a first network element. The first message is for requesting to establish a fourth tunnel, or is for requesting to transmit the multicast data through a fourth tunnel, the fourth tunnel is used by a second user plane network element to send the multicast data to a first user plane network element, the multicast data is data on the multicast session that the first terminal device requests to receive, and the first user plane network element is configured to provide the multicast data for the first terminal device.

Optionally, the processing module is further configured to: if a quantity of terminal devices that have accessed the serving access network device of the first terminal device and have joined the multicast session is less than or equal to a quantity threshold, determine to transmit the multicast data in the unicast mode.

In a possible design solution, the first network element may be a second session management network element, the first message may include fourth tunnel information, and the fourth tunnel information is for requesting the second session management network element to establish the fourth tunnel.

In another possible design solution, the first network element may be the first user plane network element, the first user plane network element may be a unicast user plane network element corresponding to the apparatus in the fifth aspect, the first message may include a second rule, the second rule is used by the first user plane network element to receive the multicast data from a second user plane network element, and the second user plane network element may be a multicast user plane network element corresponding to the multicast session.

Further, the transceiver module is configured to receive a third message from the first user plane network element, where the third message is for notifying that the first user plane network element has received the multicast data. The transceiver module is further configured to send a fourth message, where the fourth message is for paging the first terminal device or activating a user plane connection for the second unicast session.

It should be noted that the transceiver module in the fifth aspect may alternatively be configured into separate modules, for example, configured into a receiving module and a sending module. The receiving module is configured to perform a receiving function, and the sending module is configured to perform a sending function. An implementation of the transceiver module is not specifically limited in this application.

Optionally, the communication apparatus in the fifth aspect may further include a storage module, and the storage module stores a program or instructions. When the processing module executes the program or the instructions, the communication apparatus in the fifth aspect is enabled to perform the communication method in the third aspect.

It should be noted that the communication apparatus in the fifth aspect may be a unicast session management network element, for example, an SMF network element, or may be a chip (system) or another part or component that can be configured in the unicast session management network element. This is not limited in this application.

In addition, for technical effects of the communication apparatus in the fifth aspect, refer to the technical effects of the communication method in the third aspect. Details are not described herein again.

According to a sixth aspect, a communication apparatus is provided. The apparatus includes a processing module and a transceiver module. The transceiver module is configured to receive a first message from a first session management network element. The processing module is configured to establish, based on the first message, a fourth tunnel used by a second user plane network element to send multicast data to a first user plane network element. Alternatively, the processing module is configured to request, based on the first message, a second user plane network element to send multicast data to a first user plane network element through a fourth tunnel. The multicast data is data on a multicast session that a first terminal device requests to receive, the first user plane network element is configured to provide the multicast data for the first terminal device, the first user plane network element is a unicast user plane network element corresponding to the first session management network element, and the second user plane network element is a multicast user plane network element corresponding to the apparatus.

In a possible design solution, the first message includes fourth tunnel information, and the fourth tunnel information is for establishing the fourth tunnel.

Optionally, the transceiver module is further configured to send a second message to the second user plane network element, where the second message includes the fourth tunnel information.

Further, the second message may include a third rule, and the third rule is for configuring the second user plane network element to send the multicast data to the first user plane network element.

It should be noted that the transceiver module in the sixth aspect may alternatively be configured into separate modules, for example, configured into a receiving module and a sending module. The receiving module is configured to perform a receiving function, and the sending module is configured to perform a sending function. An implementation of the transceiver module is not specifically limited in this application.

Optionally, the communication apparatus in the sixth aspect may further include a storage module, and the storage module stores a program or instructions. When the processing module executes the program or the instructions, the communication apparatus in the sixth aspect is enabled to perform the communication method in the fourth aspect.

It should be noted that the communication apparatus in the sixth aspect may be a multicast session management network element, for example, an M-SMF network element, or may be a chip (system) or another part or component that can be configured in the multicast session management network element. This is not limited in this application.

In addition, for technical effects of the communication apparatus in the sixth aspect, refer to the technical effects of the communication method in the fourth aspect. Details are not described herein again.

According to a seventh aspect, a communication apparatus is provided. The communication apparatus includes a processor. The processor is coupled to a memory. The memory is configured to store a computer program. The processor is configured to execute the computer program stored in the memory, to enable the communication apparatus to perform the communication method according to any possible implementation of the first aspect, the third aspect, or the fourth aspect.

In a possible design, the communication apparatus in the seventh aspect may further include a transceiver. The transceiver may be a transceiver circuit or an input/output port. The transceiver may be used by the communication apparatus to communicate with another communication apparatus.

It should be noted that the communication apparatus in the seventh aspect may be a session management network element, for example, the foregoing first session management network element, the foregoing second session management network element, the communication apparatus according to any one of the second aspect, the fifth aspect, or the sixth aspect, or a chip (system) or another part or component that can be configured in each of the foregoing session management network elements or communication apparatuses. This is not limited in this application.

In addition, for technical effects of the communication apparatus in the seventh aspect, refer to the technical effects of the communication method according to any implementation of the first aspect, the third aspect, or the fourth aspect. Details are not described herein again.

According to an eighth aspect, a communication system is provided. The communication system includes one or more terminal devices, one or more access network devices, and one or more core network elements such as a session management network element and a user plane network element.

According to a ninth aspect, a computer-readable storage medium is provided. The computer-readable storage medium includes a computer program or instructions. When the computer program or the instructions is/are run on a computer, the computer is enabled to perform the communication method according to any possible implementation of the first aspect, the third aspect, or the fourth aspect.

According to a tenth aspect, a computer program product is provided. The computer program product includes a computer program or instructions. When the computer program or the instructions is/are run on a computer, the computer is enabled to perform the communication method according to any possible implementation of the first aspect, the third aspect, or the fourth aspect.

### BRIEF DESCRIPTION OF DRAWINGS

FIG. 1 is a schematic diagram of an architecture of a communication system according to an embodiment of this application;
FIG. 2 is a schematic diagram of an architecture of a 5G system;
FIG. 3 is a first schematic flowchart of a communication method according to an embodiment of this application;
FIG. 4 is a schematic diagram of three types of multicast data transmission tunnels according to an embodiment of this application;
FIG. 5A and FIG. 5B are a second schematic flowchart of a communication method according to an embodiment of this application;
FIG. 6A and FIG. 6B are a third schematic flowchart of a communication method according to an embodiment of this application;
FIG. 7 is a fourth schematic flowchart of a communication method according to an embodiment of this application;
FIG. 8 is a fifth schematic flowchart of a communication method according to an embodiment of this application;
FIG. 9 is a sixth schematic flowchart of a communication method according to an embodiment of this application;
FIG. 10 is a seventh schematic flowchart of a communication method according to an embodiment of this application;
FIG. 11 is an eighth schematic flowchart of a communication method according to an embodiment of this application;
FIG. 12 is a ninth schematic flowchart of a communication method according to an embodiment of this application;
FIG. 13 is a first schematic diagram of a structure of a communication apparatus according to an embodiment of this application; and
FIG. 14 is a second schematic diagram of a structure of a communication apparatus according to an embodiment of this application.

### DESCRIPTION OF EMBODIMENTS

The following describes technical solutions in this application with reference to the accompanying drawings.

The technical solutions in embodiments of this application may be applied to various communication systems, for example, a wireless fidelity (wireless fidelity, Wi-Fi) system, a vehicle to everything (vehicle-to-everything, V2X) communication system, a device-to-device (device-to-device, D2D) communication system, an internet of vehicles communication system, 4th generation (4th generation, 4G) mobile communication systems such as a long term evolution (long term evolution, LTE) system and a worldwide interoperability for microwave access (worldwide interoperability for microwave access, WiMAX) communication system, 5th generation (5th generation, 5G) mobile communication systems such as a new radio (new radio, NR) system, and future communication systems such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompany drawings. Furthermore, a combination of these solutions may be applied.

In addition, in embodiments of this application, terms such as "example" and "for example" mean giving an example, an illustration, or a description. Any embodiment or design solution described as an "example" in this application should not be explained as being more preferred or having more advantages than another embodiment or design solution. Exactly, the word "example" is used to present a concept in a specific manner.

In embodiments of this application, "information (information)", "signal (signal)", "message (message)", "tunnel (tunnel)", and "signaling (signaling)" may be interchangeably used sometimes. It should be noted that expressed meanings are consistent when differences are not emphasized. The terms "of (of)", "corresponding/relevant (corresponding, relevant)", and "corresponding (corresponding)" may be interchangeably used sometimes. It should be noted that expressed meanings are consistent when differences are not emphasized.

In embodiments of this application, a subscript, for example, Wi, may sometimes be written in an incorrect form, for example, W1. Expressed meanings are consistent when differences are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know: With evolution of the network architecture and emergence of new service scenarios, the technical solutions provided in embodiments of this application are also applicable to similar technical problems.

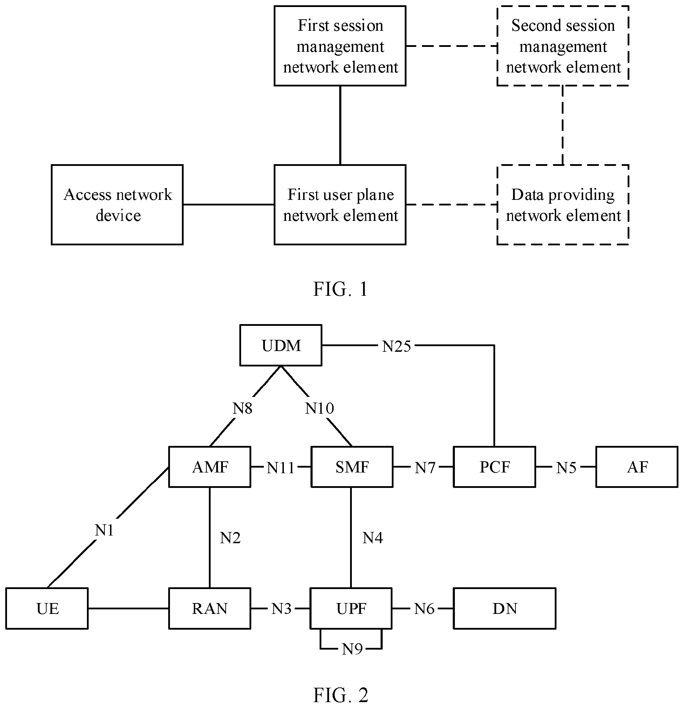

To help understand embodiments of this application, communication systems shown in FIG. 1 and FIG. 2 are first used as examples to describe in detail a communication system usable in embodiments of this application. It should be noted that the solutions in embodiments of this application may also be applied to another mobile communication system, and a corresponding name may also be replaced with a name of a corresponding function in the another mobile communication system.

For example, FIG. 1 is a schematic diagram of an architecture of a communication system usable in a communication method according to an embodiment of this application. As shown in FIG. 1, the communication system includes an access network device, a first session management network element, and a first user plane network element. Optionally, the communication system may further include one or more of the following: a first terminal, a second session management network element, or a data providing network element.

The first session management network element is a session management network element corresponding to a first unicast session. The first user plane network element is a user plane network element corresponding to the first unicast session. The first terminal is a terminal device that is within coverage of the access network device and that requests, through the first unicast session, to join a multicast session. The second session management network element is a session management network element corresponding to the multicast session. The data providing network element is a carrier network element that provides multicast data. It should be understood that the multicast data may alternatively be provided by a data network, for example, an application server in the data network.

In embodiments of this application, multicast data is data transmitted in a multicast group, and a multicast session is a session that carries the data corresponding to the multicast group. Joining the multicast session may be understood as joining the multicast group, requesting to receive the data corresponding to the multicast group, requesting to receive the data corresponding to the multicast session, or requesting a multicast service.

It should be noted that the multicast data may be provided by a multicast user plane network element or an AF network element, may be provided by the data network, or may be provided by the data network and a multicast user plane network element. A source of the multicast data is not specifically limited in embodiments of this application.

For example, FIG. 2 is a schematic diagram of a structure of a 5G system. As shown in FIG. 2, the 5G system may include two parts: an access network (access network, AN) and a core network (core network, CN). The AN is mainly configured to implement wireless access-related functions, and may include a radio access network (radio access network, RAN) device. The core network mainly includes the following network elements: an access and mobility management function (access and mobility management function, AMF) network element, a session management function (session management function, SMF) network element, a UPF network element, a policy control function (policy control function, PCF) network element, a unified data management (unified data management, UDM) network element, and an application function (application function, AF) network element.

The AMF network element is mainly responsible for mobility management such as user location update, registration of a user with a network, and a cell handover in a wireless network.

The SMF network element is mainly responsible for session management such as session establishment, modification, and release in the wireless network. Specific functions may include: assigning an internet protocol (internet protocol, IP) address to a user, selecting a UPF network element that provides a packet forwarding function, and so on.

The PCF network element is mainly responsible for providing various policies such as a network slice selection policy and a quality of service (quality of service, QoS) policy for the AMF network element and the SMF network element.

The UPF network element is mainly responsible for processing a user packet, such as forwarding and charging for the user packet.

The UDM network element is mainly configured to store user data such as subscription information and authentication/authorization information.

The AF is mainly responsible for providing a service for a 3rd generation partnership project (3rd generation partnership project, 3GPP) network, for example, affecting service routing and interacting with the PCF network element to perform policy control.

The DN may be a carrier network, for example, an IP multimedia subsystem (IP multimedia subsystem, IMS), that provides a data transmission service for a user, or may be an external network, for example, an internet (internet) or a network deployed by a content provider (content provider), connected to a carrier network.

In embodiments of this application, functions of the first session management network element and the second session management network element shown in FIG. 1 may be implemented by the SMF network element shown in FIG. 2, and a function of the first user plane network element shown in FIG. 1 may be implemented by the UPF network element shown in FIG. 2. The data providing network element shown in FIG. 1 is a network element, in the carrier network, that provides the multicast data for the first user plane network element, for example, is the AF network element or another UPF network element. A function of the access network device may be implemented by the RAN shown in FIG. 2. A function of the first terminal may be implemented by UE shown in FIG. 2.

For each type of network element, only one network element is shown in FIG. 2 as an example for ease of description. During actual application, there may alternatively be a plurality of network elements with a same name shown in FIG. 2. For example, the SMF network element shown in FIG. 2 may include one or more unicast SMF (unicast SMF, U-SMF) network elements not supporting a multicast service and one or more multicast SMFs (multicast SMFs, M-SMFs) supporting the multicast service. For another example, the UPF network element shown in FIG. 2 may include one or more unicast UPF (unicast UPF, U-UPF) network elements not supporting a multicast service and one or more multicast UPF (multicast UPF, M-UPF) network elements supporting the multicast service.

It should be noted that the one or more multicast SMFs (namely, M-SMFs) supporting the multicast service herein may be implemented by enhancing a function of the unicast SMF, for example, may be a unicast SMF serving as a multicast session management anchor; or may be a special network element having a multicast session management function. A specific representation form is not limited in embodiments of this application.

In addition, the one or more multicast UPF (namely, M-UPF) network elements supporting the multicast service may be obtained by enhancing a function of the unicast UPF, for example, may serve as an anchor of multicast session data; or may be a special network element having a multicast session data entry function (where for example, the M-UPF may serve as a unified multicast user plane network element, and is irrelevant to the unicast UPF). A specific representation form is not limited in embodiments of this application.

In embodiments of this application, a user may access the communication system shown in FIG. 1 or FIG. 2 via UE, and receive a network service provided by a carrier or a third-party content provider (content provider, CP). Specifically, using FIG. 2 as an example, the user may access the 5G system via the UE. For example, the user may receive various network services such as unicast (unicast), multicast (multicast), and broadcast (broadcast) by establishing a PDU session from the UE to the data network (data network, DN) deployed by the content provider, another UPF network element, or the AF network element via the RAN and the UPF. For a specific implementation, refer to the following method embodiments. Details are not described herein.

The access network device or the RAN is a device located on a network side of the communication system and having a wireless transceiver function, or is a chip (system) or another part or component that may be configured in the network side device, and includes but is not limited to: an access point (access point, AP), for example, a home gateway, a router, a server, a switch, or a network bridge, in a wireless fidelity (wireless fidelity, Wi-Fi) system, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless relay node, a wireless backhaul node, a transmission point (transmission reception point, TRP or transmission point, TP), or the like; may be a gNB or a transmission point (TRP or TP) in a 5G system, for example, a new radio (new radio, NR) system, or one antenna panel or a group of antenna panels (including a plurality of antenna panels) of a base station in a 5G system; or may be a network node, for example, a baseband unit (BBU) or a distributed unit (distributed unit, DU), included in a gNB or a transmission point, a road side unit (road side unit, RSU) having a base station function, or the like.

The first terminal is a terminal that accesses the communication system and that has a wireless transceiver function, or is a chip or a chip system that may be configured in the terminal. The first terminal may also be referred to as a user apparatus, an access terminal, a subscriber unit, a subscriber station, a mobile station, a remote station, a remote terminal, a mobile device, a user terminal, a terminal, a wireless communication device, a user agent, or a user apparatus. The first terminal in embodiments of this application may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU having a terminal function, or the like. The first terminal in embodiments of this application may alternatively be an in-vehicle module, a vehicle-mounted component, an automotive chip, or an on board unit that is built in a vehicle as one or more components or units. The vehicle may implement the communication method provided in this application through the in-vehicle module, the vehicle-mounted component, the automotive chip, or the on board unit that is built in the vehicle.

In embodiments of this application, the access network device and various network elements in the core network may also be collectively referred to as network side devices or network devices. Similarly, the first terminal may also be referred to as a user side device or user equipment. A name of each network side device or user side device is not specifically limited in embodiments of this application.

It should be understood that FIG. 1 and FIG. 2 are merely simplified schematic diagrams used as examples for ease of understanding. The communication systems shown in FIG. 1 and FIG. 2 may further include other network devices and/or other terminal devices that are not shown in FIG. 1 and FIG.2.

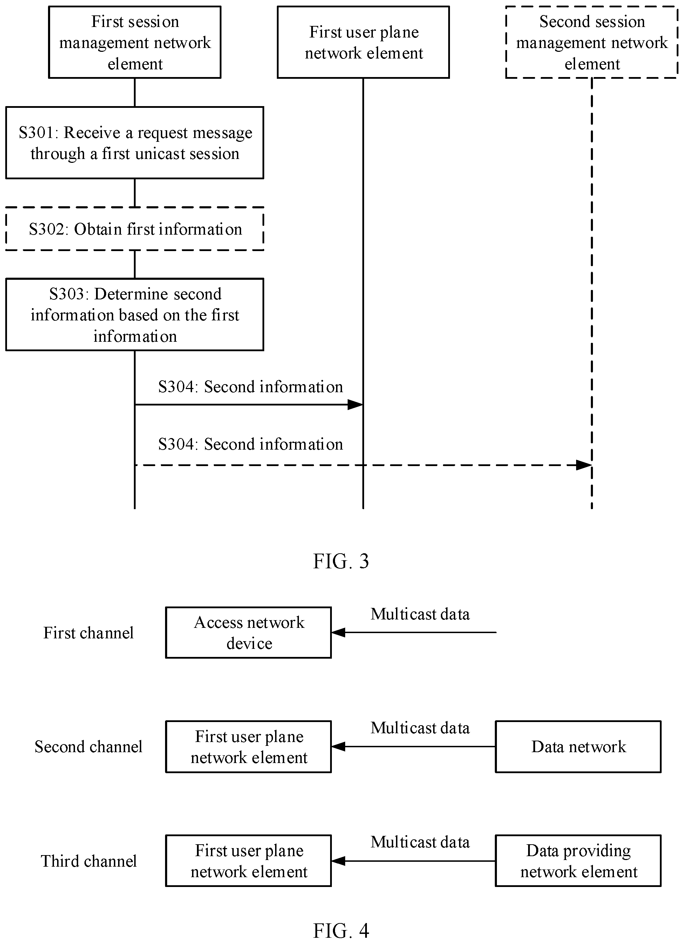

With reference to FIG. 3 to FIG. 10, the following describes in detail the communication method provided in embodiments of this application.

For example, FIG. 3 is a first schematic flowchart of a communication method according to an embodiment of this application. The communication method may be applied to the communication system shown in FIG. 1 or FIG. 2. The following uses the communication system shown in FIG. 1 as an example for description.

As shown in FIG. 3, the communication method includes the following steps.

S301: The first session management network element receives a request message through a first unicast session.

The request message is for adding a first terminal to a multicast group.

For example, the first session management network element may be the SMF network element shown in FIG. 2, the first terminal may be the UE shown in FIG. 2, the first unicast session may include a PDU session between the UE and the UPF, and the request message may include an IGMP join request or a multicast listener report (multicast listener report, MLR).

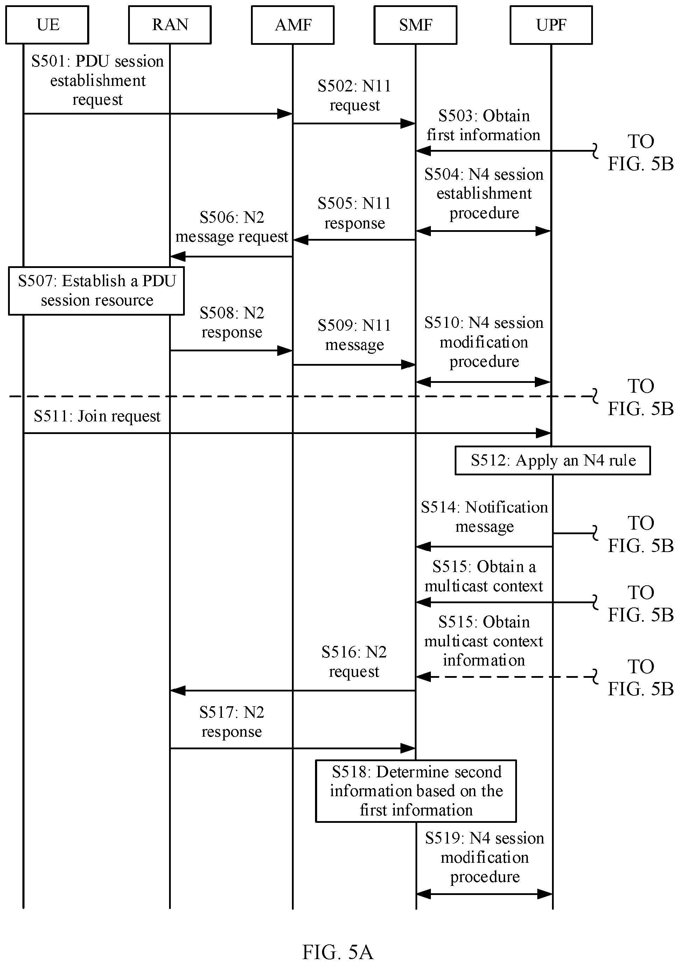

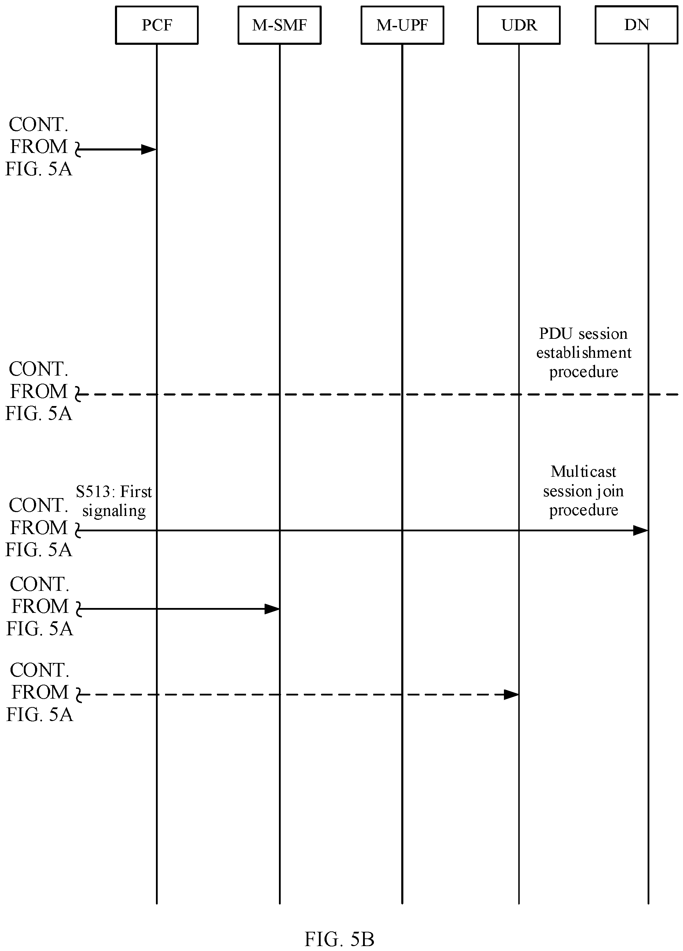

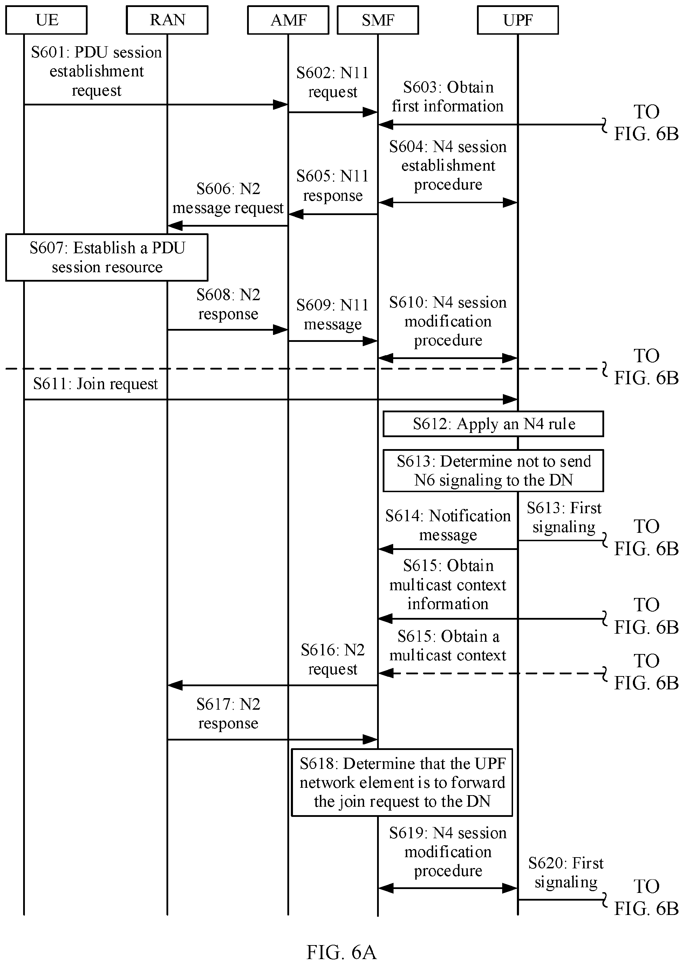

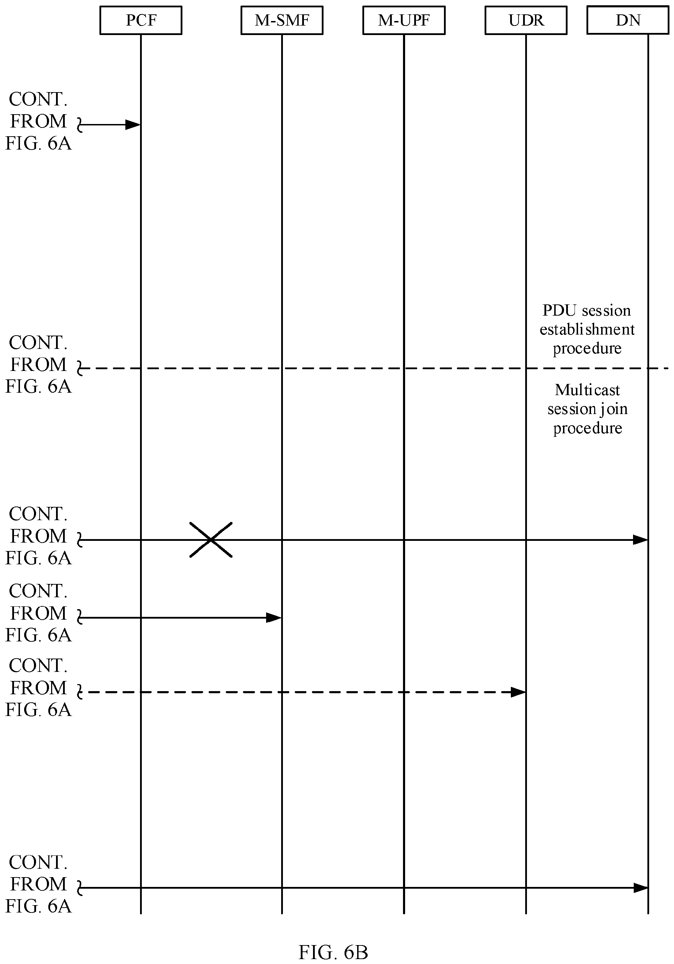

Optionally, the PDU session may be established through a PDU session establishment procedure initiated by the first terminal, or an existing PDU session may be modified through a PDU session modification procedure. For a specific implementation, refer to the following communication method shown in FIG. 5A and FIG. 5B or FIG. 6A and FIG. 6B. Details are not described herein.

Optionally, that the first session management network element receives a request message through a first unicast session in S301 may include: The SMF network element receives the IGMP join request or the MLR from the UE through the PDU session. The IGMP join request is for requesting to support an internet protocol version 4 (IP version 4, IPv4) multicast service, and the MLR is for requesting to support an internet protocol version 6 (IP version 6, IPv6) multicast service. For a specific implementation of the request message, refer to the following communication method shown in FIG. 5A and FIG. 5B or FIG. 6A and FIG. 6B. Details are not described herein.

S302: The first session management network element obtains first information.

The first information may include at least one of the following: first tunnel information, first capability information, second tunnel information, second capability information, third tunnel information, third capability information, or a first rule. The first tunnel information indicates that an access network device of the first terminal has a tunnel for receiving multicast data. The first capability information indicates that the access network device of the first terminal supports multicast. The second tunnel information indicates that a data network has a tunnel for sending the multicast data to the first user plane network element. The second capability information indicates that the data network does not support multicast. The third tunnel information indicates that the data providing network element has a tunnel for sending the multicast data to the first user plane network element. The third capability information indicates that the data providing network element does not support multicast. The first rule indicates that the first unicast session is for transmitting the multicast data. The following separately provides descriptions.

For example, FIG. 4 is a schematic diagram of three types of multicast data transmission tunnels according to an embodiment of this application. A multicast data transmission tunnel is a tunnel for transmitting multicast data in a unicast mode or a multicast mode. For example, the tunnel may be a reused unicast data transmission tunnel, for example, a transmission tunnel (tunnel) from the user plane network element that uses a unicast PDU session to the access network device; or the tunnel may be a multicast data-dedicated transmission tunnel, for example, a multicast-dedicated transmission tunnel from the user plane network element to the access network device or a multicast-dedicated session (session), or may be a tunnel for transmission in an IP multicast mode. As shown in FIG. 4, a first tunnel is a tunnel used by the access network device of the first terminal to receive multicast data, and a direct source of the multicast data may be the first user plane network element or another user plane network element, for example, a second user plane network element. In other words, the first tunnel focuses on a fact that the access network device can receive the multicast data, and does not limit a transmission path on which the multicast data arrives at the access network device, to be specific, does not limit specific network elements through which the multicast data passes before the multicast data arrives at the access network device. As shown in FIG. 4, the first tunnel may be one of the following: the DN → the first user plane network element → the access network device, the DN → the second user plane network element → the access network device, an AF network element → the first user plane network element → the access network device, the AF network element → the second user plane network element → the access network device, the DN → the second user plane network element → the first user plane network element → the access network device, or the AF network element → the second user plane network element → the first user plane network element → the access network device. The second user plane network element may include one or more user plane network elements other than the first user plane network element in a carrier network, and the transmission path corresponding to the first tunnel may not include the first user plane network element, for example, may be the DN → the second user plane network element → the access network device, or the AF network element → the second user plane network element → the access network device.

It should be noted that optionally, a manner in which the first session management network element obtains the first tunnel information may be as follows: The first session management network element obtains information about a TID, a TEID, or an IP address of the first tunnel from the access network device of the first terminal or a mobility management network element for the first terminal. Alternatively, the first session management network element obtains indication information from the access network device of the first terminal or a mobility management network element for the first terminal, where the indication information indicates that the access network device of the first terminal already has the first tunnel. The indication information may be an implicit indication. For example, the information sent by the access network device of the first terminal to the first session management network element does not include information about a TID, a TEID, or an IP address of the first tunnel, or does not include multicast context information. Alternatively, the indication information may be an explicit indication, for example, include an information element (information element, IE) indicating that "the access network device of the first terminal has the first tunnel". This is not specifically limited in this embodiment of this application.

In embodiments of this application, a user plane network element that provides data for the access network device may also be referred to as an anchor user plane function (anchor UPF, A-UPF) network element, for example, a unicast anchor user plane network element or a multicast anchor user plane network element.

As shown in FIG. 4, a second tunnel is a tunnel used by the DN to send multicast data to the first user plane network element, namely, the DN → the first user plane network element; a third tunnel is a tunnel used by the data providing network element to send multicast data to the first user plane network element, namely, the data providing network element → the first user plane network element. The data providing network element is a network element, in the carrier network, that provides the multicast data for the first user plane network element, and may include the AF network element or a user plane network element other than the first user plane network element, for example, the second user plane network element.

It can be learned with reference to the second tunnel and the third tunnel that the first tunnel may be a multicast data transmission tunnel including the second tunnel and/or the third tunnel, to be specific, the second tunnel or the third tunnel may be a component of the complete multicast data transmission path corresponding to the first tunnel. For example, when the data providing network element is the second user plane network element, and the first tunnel is the AF network element → the second user plane network element → the first user plane network element → the access network device or the DN → the second user plane network element → the first user plane network element → the access network device, the first tunnel includes the second tunnel and the third tunnel.

It can be learned with reference to FIG. 4 that the first tunnel information, the second tunnel information, and the third tunnel information respectively indicate that the first tunnel, the second tunnel, and the third tunnel already exist, to be specific, respectively indicate that the access network device has received the multicast data, the first user plane network element has received the multicast data from the data providing network element, and the first user plane network element has received the multicast data from the data network. When any tunnel in the foregoing tunnels already exists, the tunnel does not need to be repeatedly established, thereby preventing the same multicast data from being transmitted through a plurality of tunnels, to save data transmission resources and improve data transmission efficiency. For example, when a terminal requests, through a unicast PDU session of the terminal, to receive multicast data, if a first tunnel for a multicast data transmission already exists in a network, a user plane network element corresponding to the unicast PDU session of the terminal does not send, through the unicast PDU session, the multicast data to an access network device accessed by the terminal.

The first capability information indicates that the access network device of the first terminal does not support multicast, in other words, the access network device cannot receive the multicast data in the multicast mode. The first capability information may be explicit capability information, for example, includes an information element indicating that the access network device does not support multicast; or may be implicit capability information, where for example, the information sent by the access network device to the first session management network element does not include multicast-related information (for example, does not include identification information of the multicast group or the multicast context information). The second capability information indicates that the data network does not support multicast, in other words, the data network cannot send the multicast data in the multicast mode. The third capability information indicates that the data providing network element does not support multicast, in other words, the data providing network element cannot send the multicast data in the multicast mode, where for example, a network between the data providing network element and the first user plane network element does not support multicast. The first rule indicates that the first unicast session is for transmitting the multicast data, to be specific, a transmission path corresponding to the first unicast session may be for transmitting the multicast data. It should be noted that, when at least one of any two adjacent network nodes, for example, the first terminal and the access network device, the access network device and the first user plane network element, the first user plane network element and the data providing network element, or the first user plane network element and the data network, does not support multicast, data may be transmitted in the unicast mode. When the any two adjacent network nodes both support multicast, the data may be transmitted in the unicast mode or the multicast mode. The data may be unicast data, or may be multicast data. This is not specifically limited in this embodiment of this application.

In this embodiment of this application, the first session management network element may obtain the first information from one or more network elements in one or more of the following manners:

The first session management network element obtains, from a policy control network element or a centralized storage network element, at least one of the following: the first tunnel information, the first capability information, the second tunnel information, the second capability information, the third tunnel information, the third capability information, or the first rule.

The first session management network element obtains, from a second session management network element, at least one of the following: the first tunnel information, the first capability information, the second tunnel information, the second capability information, or the first rule.

The first session management network element obtains, from the first user plane network element, at least one of the following: the first tunnel information, the first capability information, the second tunnel information, the second capability information, the third tunnel information, or the third capability information.

The first session management network element obtains, from the access network device or an AMF network element, at least one of the following: the first tunnel information or the first capability information.

In this embodiment of this application, the policy control network element may be the PCF network element shown in FIG. 2. The first rule may include a policy control and charging (policy control and charging, PCC) rule configured by the PCF network element. The centralized storage network element may include the UDM network element shown in FIG. 2, a unified data repository (unified data repository, UDR) network element, and a network repository function (network repository function, NRF) network element.

It should be noted that the first session management network element may obtain the first information from each of the other network elements before or after the first session management network element receives the request message, or may obtain the first information by using the request message. For example, the first tunnel information or the first capability information is obtained from the access network device or the AMF network element corresponding to the access network device by using the request message. For example, all the first information may be obtained before or after the first session management network element receives the request message. Alternatively, a part of the first information may be obtained before the first session management network element receives the request message, and the other part of the first information may be obtained after the first session management network element receives the request message.

Optionally, after obtaining various types of first information in the foregoing various manners, the first session management network element may further locally store the first information for standby use. A source, an obtaining manner, and an obtaining time point of the first information are not specifically limited in this embodiment of this application.

In addition, if the first session management network element has obtained the first information before receiving the request message, S302 may not be performed. In other words, S302 may be considered as an optional step.

S303: The first session management network element determines second information based on the first information.

The second information is for requesting the first user plane network element to send the multicast data not through the first unicast session. Alternatively, the second information is for requesting the first user plane network element not to send first signaling to the data network, the first signaling is for establishing the second tunnel, and the second tunnel is used by the data network to send the multicast data to the first user plane network element. Alternatively, the second information is for requesting the second session management network element not to send second signaling to the data providing network element, the second signaling is for establishing the third tunnel, and the third tunnel is used by the data providing network element to send the multicast data to the first user plane network element. The first user plane network element is a user plane network element corresponding to the first unicast session. The following separately provides descriptions.

In a possible design solution, the second information is for requesting to send the multicast data not through the first unicast session, and the second information may be determined based on at least one of the following first information: the first tunnel information, the first capability information, or the first rule. For example, the first tunnel information indicates that the access network device of the first terminal has the tunnel for receiving the multicast data, in other words, the first tunnel shown in FIG. 4 already exists, and the access network device can receive the multicast data. In this case, when the first user plane network element receives the multicast data, for example, through the second tunnel or the third tunnel shown in FIG. 4, the first user plane network element does not need to forward the multicast data received by the first user plane network element to the access network device, to prevent the access network device from receiving the same multicast data through different tunnels.

Optionally, the first capability information indicates that the access network device of the first terminal supports multicast, in other words, the access network device is capable of receiving the multicast data in the multicast mode. In this case, the first user plane network element needs to determine whether to forward the multicast data to the access network device. The determining operation may be specifically performed with reference to the first tunnel information. For example, if the access network device supports multicast, and the first tunnel information indicates that the first tunnel already exists, the first user plane network element may not forward the multicast data to the access network device. It should be understood that if the access network device does not support multicast, the first user plane network element does not need to forward the multicast data to the access network device in the multicast mode. In this case, the first user plane network element may send the multicast data to the access network device in the unicast mode.

Optionally, the first rule indicates that the first unicast session is for transmitting the multicast data, in other words, the multicast data is allowed to be transmitted through the first unicast session. In this case, the first user plane network element needs to determine whether to forward the multicast data to the access network device. For example, the determining operation may be performed with reference to the first tunnel information. It should be understood that if the multicast data is not allowed to be transmitted through the first unicast session, the first session management network element does not need to consider content included in other first information, for example, whether the access network device has received the multicast data or whether the access network device supports multicast data transmission, but configures by default the first user plane network element to send the data to the access network device in the unicast mode.

In this way, the first user plane network element may not repeatedly send the multicast data to the access network device, to save the transmission resources and improve the transmission efficiency.

It should be noted that after the first terminal is handed over to a target access network device, the first session management network element further needs to determine whether to establish, on the target access network device, a tunnel for receiving the multicast data, to avoid service interruption in a handover process. Therefore, optionally, the communication method shown in FIG. 3 may further include the following step:

The first session management network element sends third information to the first user plane network element after the first terminal is handed over to the target access network device, where the third information is for requesting the first user plane network element to send the multicast data to the target access network device.

Specifically, if the target access network device does not support multicast, or does not have a tunnel for receiving the multicast data, the tunnel used by the target access network device to receive the multicast data needs to be established. For example, when there is no tunnel used by the target access network device to receive the multicast data, if the target access network device does not support multicast, the tunnel used by the target access network device to receive the multicast data needs to be established. The tunnel for receiving the multicast data may correspond to a transmission tunnel for a unicast session. For another example, if the target access network device supports multicast, and there is no tunnel used by the target access network device to receive the multicast data, the tunnel used by the target access network device to receive the multicast data needs to be established.

For a specific implementation of the third information, refer to S704 below. Details are not described herein.

In this way, the tunnel used by the target access network device to receive the multicast data from the first user plane network element can be quickly established in the handover process, to ensure that receiving of the multicast data by the first terminal is not interrupted by a cell handover. This improves transmission reliability of the multicast data.

It should be understood that if the tunnel used by the target access network device to receive the multicast data already exists, for example, before the first terminal is handed over to the target access network device, another terminal device within coverage of the target access network device has requested the first session management network element to establish the tunnel used by the target access network device to receive the multicast data, after the first terminal is handed over to the target access network device, the first session management network element needs to request the first user plane network element not to repeatedly establish a tunnel for sending the multicast data to the target access network device.

In another possible design solution, the second information is for requesting the first user plane network element not to send the first signaling to the data network, and the second information may be determined based on at least one of the following first information: the first tunnel information, the second tunnel information, the second capability information, the third tunnel information, or the first rule.

The first tunnel information indicates that the access network device of the first terminal has the tunnel for receiving the multicast data, in other words, the first tunnel shown in FIG. 4 already exists, and the access network device can receive the multicast data. In this case, it is unnecessary to repeatedly establish a second tunnel, regardless of whether the first tunnel includes the second tunnel. Therefore, the first session management network element may request the first user plane network element not to send, to the data network, the first signaling for establishing the second tunnel.

Similarly, the second tunnel information indicates that there is the tunnel used by the data network to send the multicast data to the first user plane network element, and the third tunnel information indicates that there is the tunnel used by the data providing network element to send the multicast data to the first user plane network element. In other words, the tunnel used by the first user plane network element to receive the multicast data already exists. In this case, it is unnecessary to request the first user plane network element to establish another second tunnel. Therefore, the first session management network element may request the first user plane network element not to send, to the data network, the first signaling for establishing the second tunnel.

Optionally, whether to establish the second tunnel may alternatively be determined with reference to a capability of the data network. Therefore, if the second capability information indicates that the data network does not support multicast, to be specific, cannot establish the second tunnel, the first session management network element does not need to request the first user plane network element to send the first signaling to the data network.

Optionally, if the third tunnel information indicates that the data providing network element has the third tunnel for sending the multicast data to the first user plane network element, in other words, the third tunnel shown in FIG. 4 already exists, and the first user plane network element can receive the multicast data. In this case, it is unnecessary to establish the second tunnel. Therefore, the first session management network element does not need to request the first user plane network element to send the first signaling to the data network.

Optionally, if a multicast service is authorized to use the established unicast tunnel to transmit the multicast data, it is unnecessary to establish the second tunnel. Therefore, if the first rule indicates that the first unicast session is for transmitting the multicast data, in other words, the multicast data is allowed to be transmitted on the transmission path related to the first unicast session, it is unnecessary to establish the second tunnel. In this case, the first session management network element does not need to request the first user plane network element to send the first signaling to the data network.

In this way, the second tunnel used by the first user plane network element to receive the multicast data may not be established, to prevent the data network from repeatedly sending the same multicast data to the access network device through different user plane network elements. This saves the data transmission resources and improves the data transmission efficiency.

It should be noted that after the first terminal is handed over to a target access network device, the first session management network element further needs to determine whether to establish, on the data network, a tunnel for sending the multicast data to the first user plane network element, to avoid service interruption in a handover process. Therefore, optionally, the communication method shown in FIG. 3 may further include the following step:

The first session management network element sends fourth information to the first user plane network element after the first terminal is handed over to the target access network device, where the fourth information is for requesting the first user plane network element to send the first signaling to the data network.

Specifically, if the target access network device does not support multicast, or does not have a tunnel for receiving the multicast data, the second tunnel used by the data network to send the multicast data to the first user plane network element needs to be established.

For example, when there is no tunnel used by the data network to send the multicast data to the target access network device, if the target access network device does not support multicast, a unicast tunnel used by the data network to send the multicast data to the first user plane network element needs to be established. For another example, when there is no second tunnel used by the data network to send the multicast data to the first user plane network element, if the target access network device supports multicast, a multicast tunnel used by the data network to send the multicast data to the target access network device may be established.

For a specific implementation of the fourth information, refer to S804 and S806 below. Details are not described herein.

In this way, the tunnel used by the target access network device to receive the multicast data from the first user plane network element can be quickly established, to ensure that receiving of the multicast data by the first terminal is not interrupted by a cell handover. This improves transmission reliability of the multicast data.

It should be understood that, if the second tunnel used by the data network to send the multicast data to the first user plane network element already exists, for example, before the first terminal is handed over to the target access network device, another terminal device within coverage of the target access network device has requested the first session management network element to establish the second tunnel used by the data network to send the multicast data to the first user plane network element or the third tunnel used by the data providing network element to send the multicast data to the first user plane network element, in other words, the first user plane network element already has the tunnel for receiving the multicast data, after the first terminal is handed over to the target access network device, the first session management network element may also request the first user plane network element not to repeatedly establish the second tunnel.

In still another possible design solution, the second information is for requesting the second session management network element not to send the second signaling to the data providing network element, and the second information may be determined based on at least one of the following first information: the first tunnel information, the first capability information, the second tunnel information, the third tunnel information, the third capability information, or the first rule.

For example, if the first tunnel information indicates that the access network device of the first terminal has the tunnel for receiving the multicast data, in other words, the first tunnel shown in FIG. 4 already exists, and the access network device can receive the multicast data, it is unnecessary to establish a third tunnel, regardless of whether the first tunnel includes the third tunnel. Therefore, the first session management network element may request the second session management network element not to send, to the data providing network element, for example, the second user plane network element, the second signaling for establishing the third tunnel.

Optionally, the first capability information indicates that the access network device of the first terminal supports multicast, in other words, the access network device is capable of receiving the multicast data in the multicast mode. In this case, the first session management network element needs to determine whether the third tunnel from the data providing network element to the first user plane network element needs to be established. For example, the determining operation may be performed with reference to the first tunnel information or the second tunnel information. If the access network device supports multicast, and none of the first tunnel, the second tunnel, and the third tunnel exists, the first session management network element needs to request the second session management network element to send the second signaling to the data providing network element. It should be understood that, if the access network device does not support multicast, or the first tunnel, the second tunnel, or the third tunnel already exists, the first session management network element may determine that the third tunnel does not need to be established or repeatedly established. In this case, the first session management network element may request the second session management network element not to send the second signaling to the data providing network element.

Optionally, if the third tunnel information indicates that the data providing network element has the third tunnel for sending the multicast data to the first user plane network element, in other words, the third tunnel shown in FIG. 4 already exists, and the first user plane network element can receive the multicast data. In this case, it is unnecessary to repeatedly establish a third tunnel. Therefore, the first session management network element does not need to request the first user plane network element to send the second signaling to the data providing network element.

Optionally, whether to establish the third tunnel may alternatively be determined with reference to a capability of the data providing network element. Therefore, if the third capability information indicates that the data providing network element does not support multicast, to be specific, cannot establish the third tunnel, the first session management network element may request the second session management network element not to send the second signaling to the data providing network element.

Optionally, if a multicast service is authorized to use the established unicast session to transmit the multicast data, it is unnecessary to establish the third tunnel. Therefore, if the first rule indicates that the first unicast session is for transmitting the multicast data, in other words, the multicast data is allowed to be transmitted on the transmission path related to the first unicast session, it is unnecessary to establish the third tunnel, and the first session management network element may request the second session management network element not to send the second signaling to the data providing network element.

It should be noted that, in another possible design solution, the first session management network element may not send a message to the second session management network element. In this way, the second session management network element does not send the second signaling to the data providing network element, and therefore a transmission path from the data providing network element to the access network device or the first user plane network element is not established.

In this way, the data providing network element does not send, to the first user plane network element, the multicast data that has been sent to the access network device through another tunnel, to save the data transmission resources and improve the data transmission efficiency.

It should be noted that after the first terminal is handed over to a target access network device, the first session management network element further needs to determine whether a tunnel from the data providing network element to the target access network device or a tunnel from the data providing network element to the first user plane network element needs to be established, to avoid service interruption in a handover process. Therefore, optionally, the communication method shown in FIG. 3 may further include the following step:

The first session management network element sends fifth information to the second session management network element after the first terminal is handed over to the target access network device, where the fifth information is used by the second session management network element to request a second user plane network element corresponding to the second session management network element to send the multicast data to the first user plane network element or the target access network device.

Specifically, if the target access network device does not support multicast, or does not have a tunnel for receiving the multicast data, a tunnel used by the second user plane network element to send the multicast data to the target access network device needs to be established, or a tunnel used by the second user plane network element to send the multicast data to the target access network device through the first user plane network element needs to be established. It should be understood that if the target access network device supports multicast, and the target access network device already has a tunnel for receiving the multicast data, in other words, the target access network device can receive the multicast data, it is unnecessary to establish a tunnel used by the second user plane network element to send the multicast data to the target access network device or a tunnel used by the second user plane network element to send the multicast data to the target access network device through the first user plane network element.

For a specific implementation of the fifth information, refer to S904 and S905 or S1003 and S1004 below. Details are not described herein.

In this way, the tunnel used by the second user plane network element to send the multicast data to the target access network device can be quickly established, to ensure that receiving of the multicast data by the first terminal is not interrupted by a cell handover. This improves transmission reliability of the multicast data.

Further, the fifth information may include tunnel information on a target access network device side or tunnel information on a first user plane network element side. The tunnel information on the target access network device side is for establishing a tunnel used by the target access network device to receive the multicast data from the first user plane network element or the data providing network element, and the tunnel information on the first user plane network element side is for establishing the transmission tunnel used by the first user plane network element to receive the multicast data from the data providing network element.

Optionally, the communication method shown in FIG. 3 may further include: The first session management network element receives the tunnel information on the target access network device side from the AMF network element corresponding to the first terminal or the centralized storage network element.

Optionally, the communication method shown in FIG. 3 may further include: The first session management network element receives the tunnel information on the first user plane network element side from the first user plane network element or the centralized storage network element.

For the tunnel information on the target access network device side and an obtaining manner thereof, and the tunnel information on the first user plane network element side and an obtaining manner thereof, refer to the following method embodiments shown in FIG. 5A and FIG. 5B to FIG. 10. Details are not described herein.

S304: The first session management network element sends the second information.

Specifically, the first session management network element may send the second information to the first user plane network element or the second session management network element based on content of the second information.

For example, if the second information is for requesting the first user plane network element to send the multicast data not through the first unicast session, or the second information is for requesting the first user plane network element not to send the first signaling to the data network, the first session management network element needs to send the second information to the first user plane network element. Refer to the following method embodiments shown in FIG. 5A and FIG. 5B to FIG. 10. Details are not described herein.

For another example, if the second information is for requesting the second session management network element not to send the second signaling to the data providing network element, the first session management network element needs to send the second information to the second session management network element. Refer to the following method embodiments shown in FIG. 5A and FIG. 5B to FIG. 10. Details are not described herein.

The following uses a 5G system as an example to describe in detail a specific implementation of the communication method provided in embodiments of this application in the 5G system with reference to a PDU session establishment procedure and a multicast session join procedure.

For example, FIG. 5A and FIG. 5B are a second schematic flowchart of a communication method according to an embodiment of this application. The communication method may be applied to the communication system shown in FIG. 2, to specifically implement the communication method shown in FIG. 3.

As shown in FIG. 5A and FIG. 5B, the communication method includes a PDU session establishment procedure and a multicast session join procedure. Refer to the following S501 to S510 and S511 to S519 respectively.

S501: UE sends a PDU session establishment request to an AMF network element.

The PDU session establishment request (PDU session establishment request) includes an identifier of a PDU session (a PDU session identifier) that the UE requests to establish, a data network name (data network name, DNN) used by the UE to request to establish the PDU session, single network slice selection assistance information (single network slice selection assistance information, S-NSSAI), N1 session management (session management, SM) information, or the like. In other words, the UE may first establish the PDU session through the PDU session establishment procedure, and then join a multicast session through the established PDU session. It should be noted that if a corresponding PDU session has been established (for example, a PDU session corresponding to the DNN and/or the S-NSSAI has been established) before the UE requests to join the multicast session, the UE may skip the PDU session establishment procedure, and directly join the multicast session through the existing PDU session.

It should be noted that after the PDU session is established, the UE may further send a non-access stratum (non-access stratum, NAS) message, for example, a PDU session modification request (PDU session modification request), to the AMF network element. In other words, the UE may alternatively join the multicast session through a PDU session modification procedure. A specific implementation in which the UE requests a PDU session resource is not specifically limited in this embodiment of this application.

Optionally, the UE may alternatively join the multicast session not by sending the NAS message, but send a join request (for example, an MLR or an IGMP join message) through a user plane of the existing PDU session. The join request includes identification information of a multicast group or the like. Then, a UPF network element identifies the join request, and sends the identification information of the multicast group or the like to an SMF network element.

Further, the PDU session establishment/modification request sent by the UE to the AMF network element is usually forwarded via a RAN accessed by the UE. In this process, the RAN may further report, to the AMF network element, capability information of the RAN, for example, whether the RAN supports multicast and indication information indicating whether the RAN has received multicast data. When the capability information reported by the RAN indicates that the RAN supports multicast, the capability information may be considered as first capability information reported by the RAN. Similarly, when the indication information reported by the RAN indicates that the RAN has received the multicast data, it may be considered that the RAN reports first tunnel information.

S502: The AMF network element sends an N11 request to the SMF network element.

Specifically, the AMF network element selects, based on the DNN and the S-NSSAI in the PDU session establishment request and information such as load or a policy, the SMF network element that manages the PDU session, and sends the N11 request to the selected SMF network element.

The N11 request may be an SM context create request (Nsmf_PDUSession_CreateSMContext request), and may include the N1 SM information, the PDU session identifier, the DNN, the S-NSSAI, or the like in the PDU session establishment/modification request received by the AMF network element from the UE.

Optionally, if the RAN reports the first tunnel information and the first capability information to the AMF network element in S501, the AMF network element may also report the first tunnel information and the first capability information to the SMF network element.

S503: The SMF network element obtains first information.

Specifically, the SMF network element selects a PCF network element based on the information such as the DNN or the S-NSSAI received from the AMF network element. Optionally, the SMF network element may alternatively query a UDR network element, a UDM network element, or an NRF network element for one or more of the DNN, the S-NSSAI, or the like, and select a PCF network element based on a result fed back by the NRF network element.

Then, the SMF initiates a session management policy establishment request (SM policy establishment request) to the selected PCF network element, to establish a session management policy association relationship between the SMF network element and the PCF network element.

Then, the PCF network element sends the first information to the SMF network element. The first information may include one or more of the following: the first tunnel information, the first capability information, second tunnel information, second capability information, third tunnel information, third capability information, or a first rule.

The first tunnel information indicates that the RAN already has a tunnel for receiving the multicast data, for example, the first tunnel shown in FIG. 4. The first capability information indicates that the RAN supports multicast. The second tunnel information indicates that a DN has a tunnel for sending the multicast data to the UPF network element, for example, the second tunnel shown in FIG. 4. The second capability information indicates that the DN does not support multicast. The third tunnel information indicates that a multicast user plane function (multicast UPF, M-UPF) network element already has a tunnel for sending the multicast data to the UPF network element, for example, the third tunnel shown in FIG. 4. The third capability information indicates that the M-UPF network element does not support multicast. The first rule indicates that the PDU session whose establishment is initiated by the UE is for transmitting the multicast data.

It should be noted that the PCF network element herein may send only a part of the first information, for example, the first rule (or may even not provide any content of the first information), to the SMF network element. In this case, in the subsequent multicast session join procedure of the UE, the SMF network element may further request the PCF network element to provide the other first information. For a specific procedure, refer to description content in step S514.

Optionally, the first rule may include a data forwarding indication. The data forwarding indication indicates that a forwarding action rule (forwarding action rule, FAR) configured by the SMF network element for the UPF network element is as follows: If the UPF network element learns that the tunnel used by the RAN to receive the multicast data, for example, the first tunnel shown in FIG. 4, already exists, the UPF network element does not send, to the RAN, the multicast data received by the UPF network element.

It should be noted that the data forwarding indication may be carried in a part of fields of a PCC rule, or may be used as parallel information of a PCC rule and provided for the SMF network element together with the PCC rule. This is not specifically limited in this embodiment of this application.

S504: The SMF network element initiates an N4 session establishment procedure to the UPF network element.

Specifically, the SMF network element generates N4 configuration information, for example, a packet detection rule (packet detection rule, PDR), a forwarding action rule (forwarding action rule, FAR), a QoS enforcement rule (QoS enforcement rule, QER), and a usage reporting rule (usage reporting rule, URR), according to the first rule in S503.

The packet detection rule is for classifying downlink data received by the UPF network element, and may include packet detection information such as an IP address and a port number, a corresponding data forwarding rule, a corresponding usage reporting rule, a corresponding QoS enforcement rule, and the like.

The forwarding action rule includes related information such as whether to forward, discard, or buffer the downlink data corresponding to the PDR.

The usage reporting rule includes information for reporting the downlink data corresponding to the PDR, for example, a trigger condition, a start moment, or an end moment for sending the reported information by the UPF network element.

The QoS enforcement rule includes indication information indicating whether transmission of other downlink data needs to be prevented for the downlink data corresponding to the PDR, a maximum transmission rate of the downlink data, a guaranteed data transmission rate of the downlink data, or the like.

Then, the SMF network element sends an N4 session establishment request to the UPF network element. The N4 session establishment request includes the N4 configuration information determined by the SMF network element.

Then, the UPF network element sends an N4 session establishment response to the SMF network element. The N4 session establishment response may include tunnel information on a UPF network element side, for example, a tunnel identifier (tunnel identifier, TID), a tunnel endpoint identifier (tunnel endpoint identifier, TEID), or an IP address of the UPF network element.

It should be noted that the PCF network element, an application server, the SMF network element, or the like may trigger modification of the N4 configuration information after this step and before step S511. This is not specifically limited in this embodiment of this application.

Optionally, the N4 session establishment response may further include content in the first information, for example, the first tunnel information, the first capability information, the second tunnel information, the second capability information, the third tunnel information, or the third capability information.

The first tunnel information indicates that the tunnel used by the UPF network element to send the multicast data to the RAN already exists, in other words, the RAN already has the tunnel for receiving the multicast data, namely, the first tunnel. Further, if the first tunnel is a multicast tunnel, it may be inferred that both the RAN and the UPF network element support multicast, in other words, the first capability information may also be obtained.

Similarly, if the multicast data sent by the UPF network element to the RAN is received by the UPF network element from the DN, in other words, the tunnel used by the DN to send the multicast data to the UPF network element already exists, it may be considered that the second tunnel information has been obtained. Further, if the multicast data is transmitted in a unicast mode, and the UPF network element does not support multicast, it may be considered that the second capability information, namely, that the DN does not support multicast, has been obtained.

Alternatively, if the multicast data sent by the UPF network element to the RAN is received by the UPF network element from a data providing network element, the third tunnel used by the data providing network element to send the multicast data to the UPF network element already exists, in other words, it may be considered that the third tunnel information has been obtained. Further, if the multicast data is transmitted in a unicast mode, and the UPF network element does not support multicast, it may be considered that the data providing network element does not support multicast, in other words, it may be considered that the third capability information has been obtained. The data providing network element may be an AF network element or the M-UPF network element.

It should be noted that the specific content of the first information provided by the UPF network element may alternatively be provided by the UPF network element for the SMF network element after the UPF network element receives the request for joining the multicast session from the UE. A moment at which the UPF network element sends the first information to the SMF network element is not specifically limited in this embodiment of this application.

S505: The SMF network element sends an N11 response to the AMF network element.

The N11 response may be an SM context create response (Nsmf_PDUSession CreateSMContext response), for example, an N1N2 message (Namf_Communication_N1N2MessageTransfer), and includes N2 SM information. The N2 SM information includes tunnel identification information on the UPF network element side and QoS information, for example, a QoS profile (QoS Profile), of the PDU session, to establish a tunnel, for the PDU session, between the UPF network element and the RAN.

S506: The AMF network element sends an N2 message request to the RAN.

The N2 message request (N2 message request) includes the N2 SM information received by the AMF network element from the SMF network element in S505.

S507: The RAN establishes the PDU session resource.

Specifically, the RAN establishes a context of the PDU session based on the N2 SM information in the N2 message request, and configures an air interface resource for the UE.

Optionally, the RAN may send an RRC message, for example, an RRC connection establishment/reestablishment/configuration/reconfiguration message, to the UE. The RRC message includes information about the air interface resource configured by the RAN for the UE, and the information indicates a time-frequency-code resource used by the UE to receive the multicast data.

S508: The RAN sends an N2 response to the AMF network element.

The N2 response includes N2 SM information.

Optionally, the N2 response may further include tunnel identification information such as a TID, a TEID, or an IP address on a RAN side and a QoS flow identifier (QoS flow ID, QFI) list established on the RAN side based on the QoS information, to request to establish the first tunnel used by the RAN to receive the multicast data.

It should be noted that if a multicast transmission tunnel needs to be established in the PDU session establishment procedure, and the N2 response does not include the tunnel identification information on the RAN side, it may be considered that the RAN already has the first tunnel for receiving the multicast data, in other words, the RAN may alternatively report the first tunnel information by using the N2 response.

Optionally, the N2 response may further include the capability information of the RAN. If the RAN supports multicast, it may be considered that the RAN reports the first capability information.

S509: The AMF network element sends an N11 message to the SMF network element.

The N11 message may include the N2 SM information. Optionally, the N11 message is a PDU session context update (Nsmf_PDUSession_UpdateSMContext) message.

Optionally, if the AMF network element has learned of the first tunnel information and the first capability information from the RAN, the AMF network element may alternatively report the first tunnel information and the first capability information to the SMF network element by using the N11 message.

S510: The SMF network element initiates an N4 session modification procedure to the UPF network element.

Specifically, the SMF network element determines, based on the N2 SM information, N4 configuration information that needs to be modified, and sends an N4 session modification request to the UPF network element. The N4 session modification request includes modified N4 configuration information, for example, a modified forwarding action rule.

Then, the UPF network element sends an N4 session modification response to the SMF network element. The N4 session modification response may include capability information of the UPF network element. The capability information indicates whether the UPF network element supports multicast.

S501 to S510 are the PDU session establishment procedure. The following describes in detail the multicast session join procedure. The multicast session join procedure may be performed through the PDU session established in S501 to S510, or may be performed through the PDU session modified in the PDU session modification procedure. A specific implementation of a PDU session resource for performing the multicast session join procedure is not limited in this embodiment of this application.

As shown in FIG. 5A and FIG. 5B, the multicast session join procedure may include the following S511 to S519.

S511: The UE sends the join request to the UPF network element.

The join request is used by the UE to request to join the multicast session, and may include the identification information of the multicast group, for example, an identifier or an IP address of the multicast group.

It should be noted that a message type of the join request may be determined according to a technical standard used by a multicast service. For example, if the multicast service is a multicast service supporting IPv4, the join request may be the IGMP join request. For another example, if the multicast service is a multicast service supporting IPv6, the join request is the MLR message. The message type of the join request is not specifically limited in this embodiment of this application.

S512: The UPF network element applies an N4 rule.

Specifically, the UPF network element may complete N4 session configuration, for example, apply the packet detection rule and the usage reporting rule, based on the N4 configuration information sent by the SMF network element in S504 and S510.

S513: The UPF network element sends first signaling to the DN.

The first signaling, for example, N6 signaling, is for establishing the second tunnel used by the DN to send the multicast data to the UPF network element. The following uses the N6 signaling as an example for description.

Specifically, the UPF network element may determine, based on the identification information of the multicast group in the join request, whether a tunnel, for example, the second tunnel or the third tunnel shown in FIG. 4, used by the UPF network element to receive the multicast data exists. If the UPF network element does not have such a tunnel, to be specific, the UPF network element has not received the multicast data, the UPF network element may send the N6 signaling such as a protocol independent multicast (protocol independent multicast, PIM) message to the DN, to request the DN to establish the second tunnel.

S514: The UPF network element sends a notification (notify) message to the SMF network element.

The notification message includes the identification information of the multicast group.

Specifically, the UPF network element sends the notification message to the SMF network element according to the usage reporting rule.

It should be noted that a sequence of step S513 and step S514 is not limited in this application.

Optionally, the notification message may include the content of the first information. For a specific implementation, refer to the N4 session establishment response in S504. Details are not described herein again.

It should be noted that, optionally, if the SMF network element can receive the notification message, or the notification message includes the identification information of the multicast group, it may be considered that the UPF network element can receive the multicast data. The SMF network element may determine, based on the notification message or content of the notification message, the following first information: the DN or the data providing network element supports multicast, and the tunnel used by the DN or the data providing network element to send the multicast data to the UPF network element already exists. In other words, the SMF network element may receive the second tunnel information and the second capability information, or the third tunnel information and the third capability information from the UPF network element.

Optionally, after receiving the notification message from the UPF network element, the SMF network element may alternatively obtain the first information from the PCF network element, the UDR network element, or the UDM network element. Specifically, the SMF network element sends a request message to the PCF network element, the UDR network element, or the UDM network element, where the message includes the identification information of the multicast group. Correspondingly, after receiving the request message, the PCF network element, the UDR network element, or the UDM network element sends the first information to the SMF network element. The first information may include one or more of the following: the first tunnel information, the first capability information, the second tunnel information, the second capability information, the third tunnel information, the third capability information, or the first rule.

S515: The SMF network element obtains multicast context information.

The multicast context information may include information such as QoS information or a context identifier of the multicast group.

Specifically, the SMF network element obtains the multicast context information from the UDR network element, the UDM network element, the NRF network element, or the M-SMF network element based on the identification information of the multicast group in the notification message. For example, the SMF network element may send the identification information of the multicast group to the UDR network element or the M-SMF network element, and the UDR network element or the M-SMF network element returns the multicast context information.

Optionally, the SMF network element may further obtain the following information from the M-SMF network element: whether the UE is the first UE, within coverage of the RAN, that initiates the multicast session join request procedure to the SMF network element, or whether the SMF network element receives the multicast session join request from UE within coverage of the RAN for the first time. If yes, the information indicates that the tunnel used by the RAN to receive the multicast data has not been established, in other words, the first tunnel shown in FIG. 4 does not exist. In this case, the SMF network element may indicate the UPF network element to send second signaling such as N6 signaling to the DN to establish the second tunnel, or indicate the M-SMF network element to send third signaling such as N4 signaling to the data providing network element, for example, the M-UPF network element, to establish the third tunnel.

If no, the information indicates that the tunnel used by the RAN to receive the multicast data already exists, where for example, other UE within the coverage of the RAN has previously initiated a multicast session join request procedure successfully. In other words, the first tunnel shown in FIG. 4 already exists. To be specific, in this case, the information may be considered as the first tunnel information, and there is no need to repeatedly establish a tunnel, for example, the second tunnel and the third tunnel shown in FIG. 4, used by the UPF network element to receive the multicast data. Therefore, the UPF network element does not need to send the first signaling such as the N6 signaling to the DN, and does not need to send the second signaling such as N4 signaling to the M-SMF network element.

S516: The SMF network element sends an N2 request to the RAN.

The N2 request may be an N2 session request (N2 session request), and may include context information of the multicast session. Optionally, the N2 request may further include the QoS information.

S517: The RAN sends an N2 response to the SMF network element.

The N2 response may be an N2 session response (N2 session response), and may include the N2 SM information. Optionally, the N2 response further includes the following indication information: whether the tunnel (namely, the first tunnel) for receiving the multicast data has been established. The indication information may be explicit indication information, or may be implicit indication information. For example, if the RAN includes the tunnel identification information on the RAN side in the N2 response, it is considered that the tunnel (namely, the first tunnel) used by the RAN to receive the multicast data was not previously established.

S518: The SMF network element determines second information based on the first information.

The second information is for requesting the UPF network element not to send the multicast data to the RAN.

Specifically, the SMF network element determines the second information based on the various first information obtained in S503, S514, S515, or S517. For a specific implementation, refer to S303. Details are not described herein again.

It should be noted that different content in the first information may be obtained by the SMF network element before the SMF network element receives the join request from the UE, for example, may be obtained in the PDU session establishment/modification procedure; may be obtained by the SMF network element after the SMF network element receives the join request in the join procedure; or may be obtained by the SMF network element from the received join request. A moment at which the SMF network element obtains the first information is not specifically limited in this embodiment of this application.

S519: The SMF network element initiates an N4 session modification procedure to the UPF network element.

Specifically, the SMF network element sends an N4 session modification request to the UPF network element. The N4 session modification request includes the second information, to configure the UPF not to send the multicast data to the RAN.

Then, the UPF network element sends an N4 session modification response to the SMF network element.

In this way, the procedure in which the UE joins the multicast group through the PDU session can be implemented, and repeated establishment of a multicast data transmission tunnel and repeated sending of the same multicast data can be avoided, thereby saving transmission resources and improving transmission efficiency.

For example, FIG. 6A and FIG. 6B are a third schematic flowchart of a communication method according to an embodiment of this application. The communication method may be applied to the communication system shown in FIG. 2, to specifically implement the communication method shown in FIG. 3.

As shown in FIG. 6A and FIG. 6B, the communication method includes a PDU session establishment procedure and a multicast session join procedure. Refer to the following S601 to S610 and S611 to S620 respectively.

S601: UE sends a PDU session establishment request to an AMF network element.

S602: The AMF network element sends an N11 request to an SMF network element.

S603: The SMF network element obtains first information.

S604: The SMF network element initiates an N4 session establishment procedure to a UPF network element.

S605: The SMF network element sends an N11 response to the AMF network element.

S606: The AMF network element sends an N2 message request to a RAN.

S607: The RAN establishes a PDU session resource.

S608: The RAN sends an N2 response to the AMF network element.

S609: The AMF network element sends an N11 message to the SMF network element.

S610: The SMF network element initiates an N4 session modification procedure to the UPF network element.

S601 to S610 are the PDU session establishment procedure. For a specific implementation, refer to the PDU session establishment procedure in S501 to S510. Details are not described herein again. The following describes another multicast session join procedure in which repeated transmission of multicast data can be avoided.

As shown in FIG. 6A and FIG. 6B, the another multicast session join procedure may include the following S611 to S620.

S611: The UE sends a join request to the UPF network element.

S612: The UPF network element applies an N4 rule.

For specific implementations of S611 and S612, refer to S511 and S512. Details are not described herein again.

S613: The UPF network element determines not to send first signaling to a DN.

Specifically, if the various first information obtained in S603 or S503 satisfies one or more of the following conditions, the UPF network element may determine not to send the first signaling to the DN:

The first tunnel information indicates that the RAN already has a tunnel for receiving the multicast data, in other words, the first tunnel shown in FIG. 4 already exists.

The second tunnel information indicates that a tunnel from the DN → the UPF network element already exists, in other words, the second tunnel shown in FIG. 4 already exists, and a second tunnel does not need to be repeatedly established.

The third tunnel information indicates that a tunnel from the M-UPF network element → the UPF network element already exists, in other words, the third tunnel shown in FIG. 4 already exists, and the UPF network element has received the multicast data from the M-UPF network element, and the second tunnel does not need to be established.

The second capability information indicates that the DN does not support multicast, in other words, cannot establish a multicast tunnel from the DN → the UPF network element. In this case, there is no need to send the first signaling. This avoids a signaling waste.

The UPF network element does not support multicast, and cannot establish a multicast tunnel from the DN → the UPF network element, and there is no need to send the first signaling. This avoids a signaling waste.

If a PCF network element indicates that a PDU session established/modified by the UE is not for transmitting the multicast data, the UPF network element does not need to send the first signaling to the DN either.

S614: The UPF network element sends a notification (notify) message to the SMF network element.

S615: The SMF network element obtains multicast context information.

S616: The SMF network element sends an N2 request to the RAN.

S617: The RAN sends an N2 response to the SMF network element.

For specific implementations of S614 to S617, refer to S514 to S517. Details are not described herein again.

S618: The SMF network element determines that the UPF network element is to forward the join request to the DN.

Specifically, the SMF network element determines, based on the first information obtained in S615 or S617, that the UPF network element is to forward the join request to the DN.

For example, if the SMF network element learns, from the M-SMF network element in S615, that the UE is the first UE, within coverage of the RAN, that requests to join the multicast session, in other words, the SMF network element receives, from the RAN for the first time, the join request for joining the multicast session, the SMF network element determines that the UPF network element needs to forward the join request to the DN.

For example, if the SMF network element learns, from the RAN in S617, that the tunnel used by the RAN to receive the multicast data, for example, the first tunnel, does not exist, the SMF network element determines that the UPF network element needs to forward the join request to the DN.

S619: The SMF network element initiates an N4 session modification procedure to the UPF network element.

Specifically, the SMF network element sends an N4 session modification request to the UPF network element. The N4 session modification request includes identification information of the RAN and information that is determined in S618 and that is for requesting the UPF network element to forward the join request to the DN.

Then, the SMF network element receives an N4 session modification response from the UPF network element.

S620: The UPF network element sends the first signaling to the DN.

Specifically, the UPF network element sends N6 signaling to the DN based on indication information included in the N4 session modification request, to establish the second tunnel from the DN → the UPF network element.

It should be noted that a sequence of step S620 and the operation of sending the N4 session modification response to the SMF network element by the UPF network element in step S619 is not specifically limited in this embodiment of this application.

In this way, a procedure in which the UE joins a multicast group through the PDU session can be implemented, and repeated establishment of a multicast data transmission tunnel and repeated sending of the same multicast data can be avoided, thereby saving transmission resources and improving transmission efficiency.

It should be noted that, in correspondence with the communication method shown in any one of FIG. 3, FIG. 5A and FIG. 5B, or FIG. 6A and FIG. 6B, in another possible design solution, after receiving a request message for adding a first terminal to a multicast session, a first session management network element may alternatively send seventh information based on first information. The seventh information is for requesting a first user plane network element to send multicast data, for example, through a first unicast session (by reusing the first unicast session) or not through a first unicast session (by establishing a new multicast session or another unicast session). Alternatively, the seventh information is for requesting a first user plane network element to send first signaling to a data network, the first signaling is for establishing a second tunnel, and the second tunnel is used by the data network to send multicast data to the first user plane network element. Alternatively, the seventh information is for requesting a second session management network element to send second signaling to a data providing network element, the second signaling is for establishing a third tunnel, and the third tunnel is used by the data providing network element to send multicast data to a first user plane network element. The first user plane network element is a user plane network element corresponding to the first unicast session. In this design solution, the first information may need to include one or more of the following information: first tunnel information, first capability information, second tunnel information, second capability information, third tunnel information, third capability information, or a first rule. The first tunnel information indicates that an access network device of the first terminal does not have a tunnel for receiving the multicast data. The first capability information indicates that the access network device of the first terminal does not support multicast. The second tunnel information indicates that the data network does not have a tunnel for sending the multicast data to the first user plane network element. The second capability information indicates that the data network supports multicast. The third tunnel information indicates that the data providing network element does not have a tunnel for sending the multicast data to the first user plane network element. The third capability information is for requesting that the data providing network element supports multicast. The first rule indicates that the first unicast session is for transmitting the multicast data.

It should be noted that the communication method shown in any one of FIG. 3, FIG. 5A and FIG. 5B, or FIG. 6A and FIG. 6B may also be applied to a handover (handover) scenario. To be specific, after the UE is handed over from a source access network device, for example, a source RAN (source RAN, S-RAN), to a target access network device, for example, a target RAN (target RAN, T-RAN), the UE may continue to receive the multicast data through the T-RAN according to the communication method provided in this embodiment of this application, to avoid service interruption. The following uses an example for description with reference to a handover process.

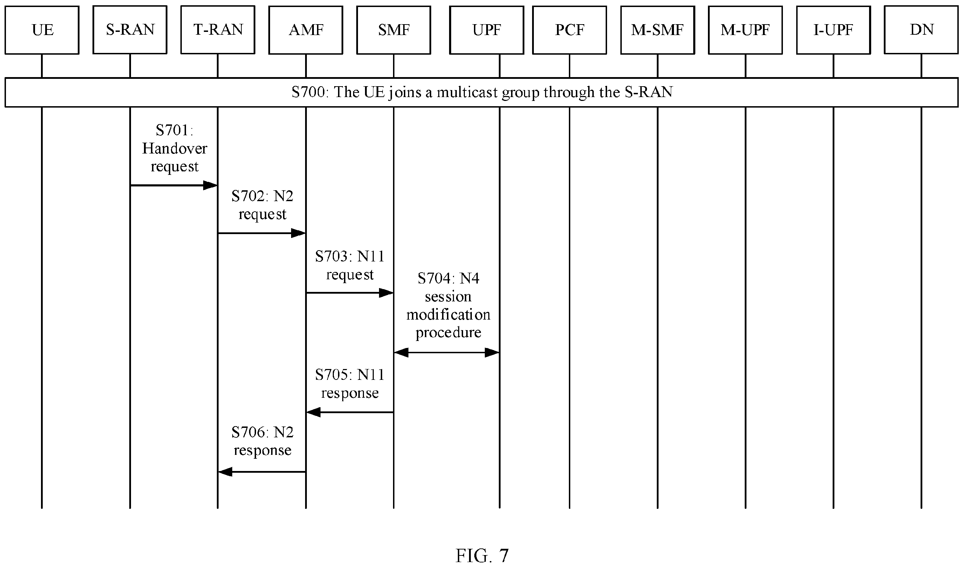

For example, FIG. 7 is a fourth schematic flowchart of a communication method according to an embodiment of this application. As shown in FIG. 7, the communication method includes the following steps.

S700: UE joins a multicast group through an S-RAN. For a specific implementation, refer to the communication method shown in any one of FIG. 3, FIG. 5A and FIG. 5B, or FIG. 6A and FIG. 6B. Details are not described herein again.

S701: The S-RAN sends a handover request (handover request) to a T-RAN.

Specifically, the UE may report, to the S-RAN, strength and/or quality of a signal received from the S-RAN and a signal received from the T-RAN. When the strength, the quality, and/or the like of the signal received by the UE from the S-RAN (for example, a serving cell of the S-RAN) are/is worse than the strength and/or the quality of the signal received from the T-RAN (for example, a target cell of the T-RAN), the S-RAN initiates the handover process. For a specific implementation, refer to an existing implementation. Details are not described in this embodiment of this application.

The handover request may include one or more of the following information: various first information learned of by the S-RAN, information about a to-be-switched PDU session (a PDU session established/modified by the UE in the S-RAN), context information of a multicast session, or the like. The context information of the multicast session may include QoS information of the multicast session, identification information of the multicast group, or the like.

Correspondingly, the T-RAN establishes a context of the multicast session based on content in the handover request.

S702: The T-RAN sends an N2 request to an AMF network element.

The N2 request may include a path switch request (path switch request) or a handover notification (handover notify).

Optionally, the N2 request may further include one or more of the following information:
multicast tunnel identification information, such as a TID, a TEID, or an IP address, allocated by the T-RAN to the multicast session;
indication information indicating whether a downlink tunnel for the multicast group needs to be established, for example, indication information indicating whether a tunnel used by the T-RAN to receive multicast data needs to be established; or
session identification information, for example, identification information of a unicast session or the multicast session that has been established on the S-RAN, such as a PDU session identifier or an IP address of the multicast session.

Optionally, the AMF network element may alternatively determine content of the first information based on some information in the N2 request sent by the T-RAN. In other words, the T-RAN may provide the first information for the AMF network element in an implicit indication manner, to save signaling resources. For example, if the N2 request includes the tunnel identification information on a T-RAN side that is allocated by the T-RAN to the multicast session, the AMF network element may learn that the tunnel for receiving the multicast data has not been established on the T-RAN side. Otherwise, the T-RAN does not need to include the tunnel identification information in the N2 request. For another example, if the T-RAN does not have context information of the multicast group previously, the T-RAN may include, in the N2 request, indication information indicating that the downlink tunnel for the multicast group needs to be established. Otherwise, the T-RAN does not need to include the indication information in the N2 request.

Optionally, if the AMF network element does not need to parse content in the N2 request, the operation of determining the first information based on the N2 request may alternatively be performed by an SMF network element. For details, refer to S703.

S703: The AMF network element sends an N11 request to the SMF network element.

The N11 request may include one or more of the following information:
identification information of the T-RAN, for example, a device identifier (RAN ID) of the T-RAN or a cell identifier (cell identifier, CID) of the T-RAN;
handover information, such as a handover cause value of the UE;
the session identification information, for example, an identifier of the to-be-switched unicast session or multicast session; or
the indication information indicating that the multicast downlink tunnel needs to be established.

For example, the N11 request may be a session management context update request (Nsmf_SMContextUpdate request).

Optionally, the SMF network element may alternatively determine the content of the first information based on some information in the N2 request forwarded by the AMF network element. For details, refer to the related descriptions of determining the first information by the AMF network element based on the N2 request sent by the T-RAN in S702. Details are not described herein again.

It should be noted that before the AMF network element sends the N11 request to the SMF network element, the AMF network element may store information about the SMF network element, for example, an association relationship between an identifier of the SMF network element and an identifier of a unicast session managed by the SMF network element.

For example, Table 1 lists an example of an association relationship between a PDU session and an SMF network element that manages the PDU session. As listed in Table 1, an SMF network element whose network element identifier is SMF-ID1 is an SMF network element that manages a PDU session whose session identifier is PDU-ID1, and an SMF network element whose network element identifier is SMF-ID2 is an SMF network element that manages a PDU session whose session identifier is PDU-ID2.

**Table 1**

| Identifier of a PDU session | Identifier of an SMF network element that manages the PDU session |
|---|---|
| PDU-ID1 | SMF-ID1 |
| PDU-ID2 | SMF-ID2 |

Specifically, the AMF network element may obtain the association relationship from the selected SMF network element in a PDU session establishment/modification procedure and record the association relationship for standby use. For a specific implementation, refer to an existing implementation. Details are not described in this embodiment of this application.

S704: The SMF network element initiates an N4 session modification procedure to a UPF network element.

Specifically, the SMF network element sends an N4 session modification request to the UPF network element based on the indication information, for example, the first tunnel information above, indicating that the downlink transmission tunnel for the multicast group needs to be established that is carried in the N11 request sent by the AMF network element. The N4 session modification request may include one or more of the following information:
a data packet identification rule for the multicast data and a corresponding forwarding rule, where the forwarding rule may be the third information above, and is for requesting the UPF network element to send the corresponding multicast data to the T-RAN;
the identification information of the unicast session or the multicast session that carries the multicast data; or
QoS information, such as a QoS flow identifier (QoS flow identifier, QFI), of the multicast data, a packet delay budget (packet delay budget, PDB) of the multicast data, a packet error rate (packet error rate, PER) of the multicast data, or the like.

Then, the SMF network element receives an N11 response from the UPF network element. The N11 response may include indication information indicating that an N4 session is successfully modified.

S705: The SMF network element sends an N11 response to the AMF network element.

The N11 response may include tunnel identification information on a UPF network element side, for example, a TID, a TEID, or an IP address on the UPF network element side, to establish a tunnel used by the UPF network element to send the multicast data to the T-RAN.

S706: The AMF network element sends an N2 response to the T-RAN.

Specifically, the N2 response may be a path switch response (path switch response), and may include the tunnel identification information on the UPF network element side.

In this way, a multicast data transmission tunnel from a DN → the UPF network element → the T-RAN or from a data providing network element → the UPF network element → the T-RAN may be established.

Then, the T-RAN may send a handover response (handover response) to the S-RAN. The handover response may include indication information indicating that the UE is allowed to be handed over from the S-RAN to the T-RAN and configuration information of an air interface resource allocated by the T-RAN to the UE, so that after the UE is handed over from the S-RAN to the T-RAN, the UE continues to receive the multicast data through the T-RAN, to avoid service interruption.

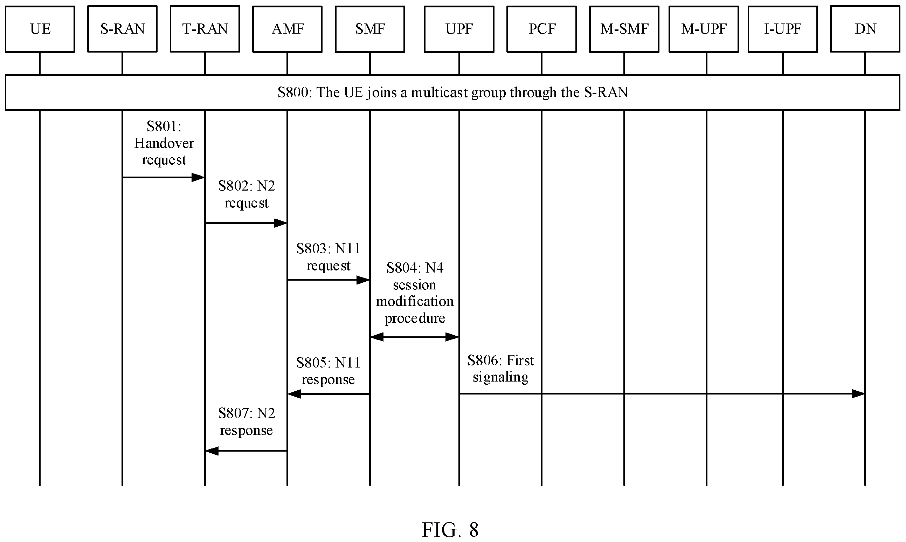

For example, FIG. 8 is a fifth schematic flowchart of a communication method according to an embodiment of this application. As shown in FIG. 8, the communication method includes the following steps.

S800: UE joins a multicast group through an S-RAN. For a specific implementation, refer to the communication method shown in any one of FIG. 3, FIG. 5A and FIG. 5B, or FIG. 6A and FIG. 6B. Details are not described herein again.

S801: The S-RAN sends a handover request (handover request) to a T-RAN.

S802: The T-RAN sends an N2 request to an AMF network element.

S803: The AMF network element sends an N11 request to an SMF network element.

For specific implementations of S801 to S803, refer to S701 to S703. Details are not described herein again.

S804: The SMF network element initiates an N4 session modification procedure to a UPF network element.

Specifically, the SMF network element sends an N4 session modification request to the UPF network element based on indication information, for example, the first tunnel information above, indicating that a downlink transmission tunnel for the multicast group needs to be established that is carried in an N11 request sent by the AMF network element. The N4 session modification request may include one or more of the following information:
identification information of a multicast session, such as an identifier or an IP address of the multicast session; or
multicast QoS information, such as QFI information.

Optionally, the N4 session modification request may further include:
fourth information, where the fourth information is for requesting the UPF network element to send first signaling to a DN, for example, an application server (application server) in the DN, and the fourth information may include one or more of the following:
a name, an IP address, or the like of the application server in the DN; or
the first signaling, which may be N6 signaling, for example, an IGMP join request or a protocol independent multicast (protocol independent multicast, PIM) message.

Alternatively, optionally, the N4 session modification request may further include:
indication information indicating to send second signaling to a data providing network element, for example, an M-UPF network element or an AF network element in a carrier network;
a name, an IP address, or the like of the data providing network element; or
the second signaling, which may be N6 signaling, for example, an IGMP join request or a PIM message.

Then, the SMF network element receives an N4 response from the UPF network element. The N4 response may include indication information indicating that an N4 session is successfully modified.

S805: The SMF network element sends an N11 response to the AMF network element.

The N11 response may include tunnel identification information on a UPF network element side, for example, a TID, a TEID, or an IP address on the UPF network element side.

S806: The UPF network element sends the first signaling to the DN.

Specifically, the UPF network element may determine, based on the indication information (namely, the fourth information) that indicates to send the first signaling to the DN and that is carried in the N4 session modification request in S804, the first signaling, the identification information of the multicast session, the multicast QoS information, or the like, that a tunnel for sending multicast data from the DN → the UPF network element needs to be established. In this case, the UPF network element sends the first signaling to the DN.

Alternatively, optionally, the UPF network element may determine, based on the indication information that indicates to send the second signaling to the data providing network element and that is carried in the N4 session modification request in S804, the second signaling, the identification information of the multicast session, the multicast QoS information, or the like, that a tunnel for sending multicast data from the data providing network element → the UPF network element needs to be established. In this case, the UPF network element sends the second signaling to the data providing network element.

It should be noted that S806 may be performed at any moment after a moment for performing S804. This is not specifically limited in this embodiment of this application. For example, S806 may be performed before or after S805 and S807 in the following, or may be performed between S805 and S807.

S807: The AMF network element sends an N2 response to the T-RAN.

For a specific implementation of S807, refer to S706. Details are not described herein again.

In this way, a multicast data transmission tunnel from the DN → the UPF network element → the T-RAN may be established. After the UE is handed over from the S-RAN to the T-RAN, the UE may continue to receive the multicast data through the T-RAN, to avoid service interruption.

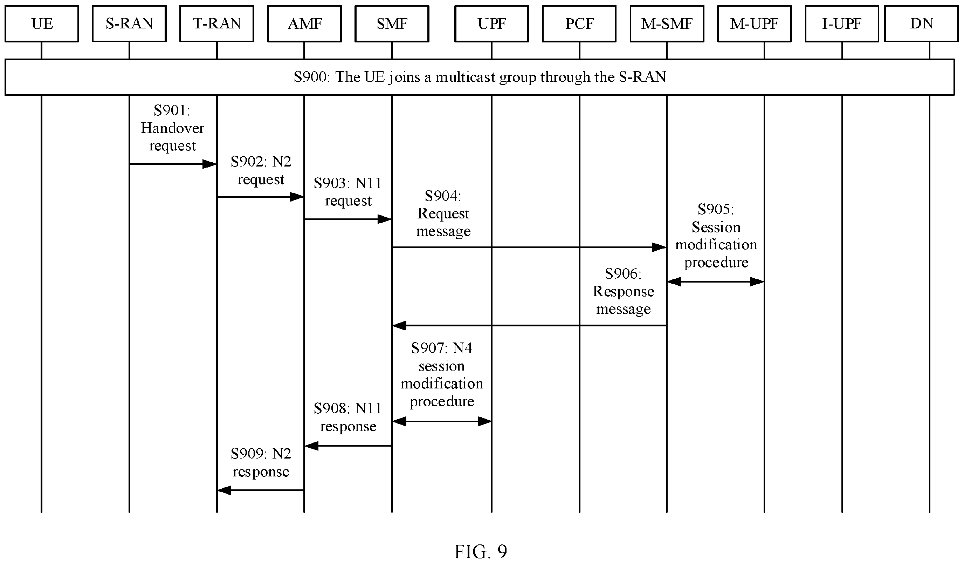

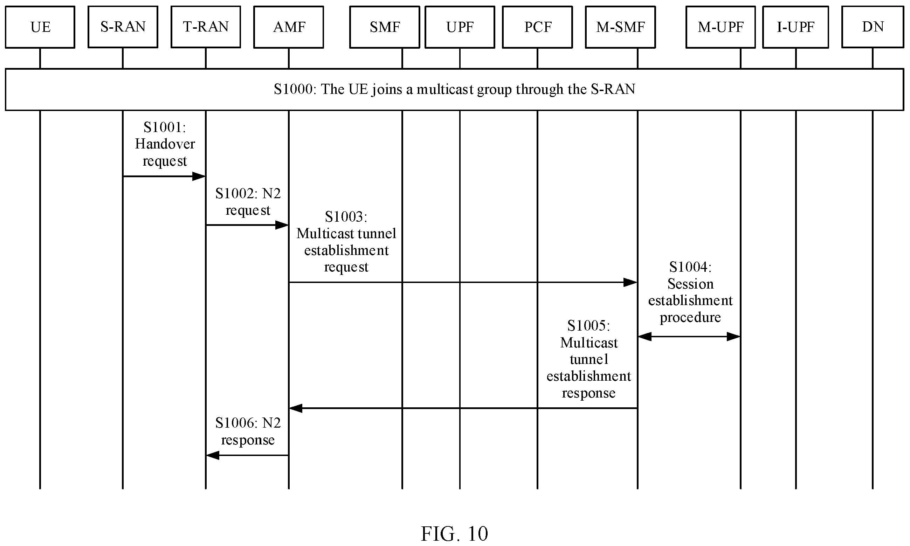

It should be noted that in the handover scenarios shown in FIG. 7 and FIG. 8, the SMF network element determines to send the multicast data to the T-RAN and request the UPF network element to send the first signaling to the DN. It should be understood that the foregoing determining operation may alternatively be performed by an M-SMF network element. For details, refer to the following communication methods shown in FIG. 9 and FIG. 10.

For example, FIG. 9 is a sixth schematic flowchart of a communication method according to an embodiment of this application. As shown in FIG. 9, the communication method includes the following steps.

S900: UE joins a multicast group through an S-RAN. For a specific implementation, refer to the communication method shown in any one of FIG. 3, FIG. 5A and FIG. 5B, or FIG. 6A and FIG. 6B. Details are not described herein again.

S901: The S-RAN sends a handover request (handover request) to a T-RAN.

S902: The T-RAN sends an N2 request to an AMF network element.

For specific implementations of S901 and S902, refer to S701 and S702. Details are not described herein again.

S903: The AMF network element sends an N11 request to an SMF network element.

The N11 request may include one or more of the following information:
the tunnel identification information, such as the TID, the TEID, or the IP address, allocated by the T-RAN to a multicast service;
identification information of the T-RAN, for example, a device identifier (RAN ID) of the T-RAN or a cell identifier (cell identifier, CID) of the T-RAN;
handover information, such as a handover cause value of the UE;
the session identification information, for example, an identifier of a to-be-switched unicast session or multicast session; or
indication information indicating that a multicast downlink tunnel needs to be established.

For example, the N11 request may be a session management context update request (Nsmf_SMContextUpdate request).

S904: The SMF network element sends a request message to an M-SMF network element.

Specifically, the SMF network element obtains multicast tunnel identification information on a UPF network element side locally or from a UPF network element based on the multicast tunnel identification information on a T-RAN side that is carried in the N11 request, and sends the request message such as an N16 request to the M-SMF network element.

The request message may include one or more of the following information: fifth information, the tunnel identification information on the UPF network side or the tunnel identification information on the T-RAN side, handover identification information, identification information of the multicast group, or the like. The fifth information is used by the M-SMF network element to indicate an M-UPF network element to send multicast data to the UPF network element or the T-RAN.

S905: The M-SMF network element initiates a session modification procedure.

Specifically, the M-SMF network element may send a session modification request to the M-UPF network element based on the fifth information, the tunnel identification information on the UPF network element side, or the tunnel identification information on the T-RAN side that is carried in the request message in S904, to request the M-UPF network element to establish a tunnel used by the M-UPF network element to send the multicast data to the UPF network element.

Then, the M-SMF network element receives a session modification response from the M-UPF network element. The session modification response may carry indication information indicating that the tunnel used by the M-UPF network element to send the multicast data to the UPF network element is successfully established.

S906: The M-SMF network element sends a response message to the SMF network element.

Optionally, the response message may include one or more of the following information:
forwarding information, such as a PDR or QoS information, of the multicast data, where for specific content of the QoS information, refer to S704, and details are not described herein again; or
identification information of the multicast session, such as the identifier of the multicast session, context identification information (a multicast context ID) of the multicast session, or address information (for example, an IP address or a tunnel identifier) of the multicast session.

It should be noted that if the fifth information in S904 is used by the M-SMF network element to request the M-UPF network element to send the multicast data to the UPF network element, S907 may need to be performed, to modify the tunnel used by the M-UPF network element to send the multicast data to the UPF network element. It should be understood that if the fifth information in S904 is used by the M-SMF network element to request the M-UPF network element to send the multicast data to the T-RAN, S907 does not need to be performed, and S908 may be directly performed. In other words, S907 may be considered as an optional step.

S907: The SMF network element initiates an N4 session modification procedure.

Specifically, the SMF network element sends an N4 session modification request to the UPF network element based on the forwarding information of the multicast data or the identification information of the multicast session that is carried in the response message in S906, to request the UPF network element to establish the tunnel for receiving the multicast data from the M-UPF network element.

Then, the SMF network element receives an N4 session modification response from the UPF network element. Optionally, the N4 session modification response may carry indication information indicating that the tunnel used by the UPF network element to receive the multicast data from the M-UPF network element is successfully established.

S908: The SMF network element sends an N11 response to the AMF network element.

The N11 response may include the tunnel identification information on the UPF network element side, for example, a TID, a TEID, or an IP address on the UPF network element side.

S909: The AMF network element sends an N2 response to the T-RAN.

The N2 response may include the tunnel identification information on the UPF network element side or tunnel identification information on an M-UPF network element side.

In a possible design solution, optionally, if the fifth information in S904 is indication information used by the M-SMF network element to request the M-UPF network element to send the multicast data to the T-RAN, the T-RAN needs to establish a tunnel for receiving the multicast data from the M-UPF network element, for example, establish a first tunnel based on the tunnel identification information on the M-UPF network element side.

In another possible design solution, optionally, if the fifth information in S904 is indication information used by the M-SMF network element to request the M-UPF network element to send the multicast data to the UPF network element, the T-RAN needs to establish a tunnel for receiving the multicast data from the UPF network element, for example, establish a first tunnel based on the tunnel identification information on the UPF network element side.

In this way, a tunnel from the M-UPF network element → the UPF network element → the T-RAN or a tunnel from the M-UPF network element → the T-RAN may be established. After the UE is handed over from the S-RAN to the T-RAN, the UE may continue to receive the multicast data through the T-RAN, to avoid service interruption.

It should be noted that when a session management network element corresponding to the AMF network element includes both the SMF network element and the M-SMF network element, the SMF network element and the M-SMF network element are a same session management network element, or the AMF network element may directly send a message to the M-SMF network element, the indication information (referred to as sixth information below) used by the M-SMF network element to request the M-UPF network element to send the multicast data to the T-RAN may alternatively be directly sent by the AMF network element to the M-SMF network element. For details, refer to the following communication method example shown in FIG. 10.

For example, FIG. 10 is a seventh schematic flowchart of a communication method according to an embodiment of this application. As shown in FIG. 10, the communication method includes the following steps.

S1000: UE joins a multicast group through an S-RAN. For a specific implementation, refer to the communication method shown in any one of FIG. 3, FIG. 5A and FIG. 5B, or FIG. 6A and FIG. 6B. Details are not described herein again.

S1001: The S-RAN sends a handover request (handover request) to a T-RAN.

S1002: The T-RAN sends an N2 request to an AMF network element.

For specific implementations of S1001 and S1002, refer to S701 and S702. Details are not described herein again.

S1003: The AMF network element sends a multicast tunnel establishment request to an M-SMF network element.

Specifically, the AMF network element may send the multicast tunnel establishment request to the M-SMF network element based on the multicast tunnel identification information on the T-RAN side that is carried in the N2 request and a locally stored association relationship between an identifier of a PDU session and an identifier of an M-SMF network element that manages or subscribes to the PDU session.

The multicast tunnel establishment request may be an N11 request, for example, a session management context update request (Nsmf_SMContextUpdate request), and may include one or more of the following information:
sixth information, where the sixth information is indication information used by the M-SMF network element to request an M-UPF network element to send the multicast data to the T-RAN;
the multicast tunnel identification information, such as the TID, the TEID, or the IP address, allocated by the T-RAN;
identification information of the T-RAN, for example, a device identifier (RAN ID) of the T-RAN or a cell identifier (cell identifier, CID) of the T-RAN;
handover identification information, for example, a handover cause value of the UE; or
the session identification information, for example, an identifier of a to-be-switched unicast session or multicast session.

It should be noted that before the AMF network element sends the N11 request to the M-SMF network element, the AMF network element may store information about the M-SMF network element, for example, the association relationship between an identifier of a PDU session and an identifier of an M-SMF network element that manages or subscribes to the PDU session.

For example, Table 2 lists an example of an association relationship between a PDU session and an M-SMF network element that manages the PDU session. As listed in Table 2, an M-SMF network element whose network element identifier is M-SMF-ID 1 is an M-SMF network element that manages a PDU session whose session identifier is PDU-ID 1, and an M-SMF network element whose network element identifier is M-SMF-ID2 is an M-SMF network element that manages a PDU session whose session identifier is PDU-ID2.

**Table 2**

| Identifier of a PDU session | Identifier of an M-SMF network element that manages the PDU session |
|---|---|
| PDU-ID1 | M-SMF-ID 1 |
| PDU-ID2 | M-SMF-ID2 |

For example, Table 3 lists an example of an association relationship between a PDU session and an M-SMF network element that subscribes to the PDU session. As listed in Table 3, an M-SMF network element whose network element identifier is M-SMF-ID1 is an M-SMF network element that subscribes to a PDU session whose session identifier is PDU-ID1, and an M-SMF network element whose network element identifier is M-SMF-ID2 is an M-SMF network element that subscribes to a PDU session whose session identifier is PDU-ID2.

**Table 3**

| Identifier of a PDU session | Identifier of an M-SMF network element that subscribes to the PDU session |
|---|---|
| PDU-ID1 | M-SMF-ID1 |
| PDU-ID2 | M-SMF-ID2 |

Specifically, the AMF network element may obtain, from the M-SMF network element, and record the association relationship in a PDU session establishment/modification procedure, a multicast session join procedure, or a PDU session subscription procedure.

For example, the AMF network element may record, in the PDU session establishment procedure, an identifier of the M-SMF network element selected by the AMF network element, and establish an association relationship between the identifier of the M-SMF network element and an identifier of a PDU session to be established in the PDU session establishment procedure.

For example, in the PDU session modification procedure, the AMF network element may obtain, from an N1N2 message transfer request (namely, an Namf_CommunicationN1N2MessageTransfer request) received from the M-SMF network element, an identifier of the M-SMF and an identifier of a PDU session managed by the M-SMF network element, and establish an association relationship between the identifier of the M-SMF network element and the identifier of the PDU session managed by the M-SMF network element.

For example, in the PDU session modification procedure, the AMF network element may obtain, from an N1N2 message transfer request (namely, an Namf_CommunicationN1N2MessageTransfer request) received from the M-SMF network element, an identifier of the M-SMF and an identifier of a PDU session subscribed to by the M-SMF network element, and establish an association relationship between the identifier of the M-SMF network element and the identifier of the PDU session subscribed to by the M-SMF network element.

For example, in the PDU session modification procedure, the AMF network element may obtain, from a subscription request received from the M-SMF network element, an identifier of the M-SMF and an identifier of a PDU session subscribed to by the M-SMF network element, and establish an association relationship between the identifier of the M-SMF network element and the identifier of the PDU session subscribed to by the M-SMF network element.

S1004: The M-SMF network element initiates a session establishment procedure.

Specifically, the M-SMF network element sends a session establishment request or a session modification request to the M-UPF network element based on the sixth information or the multicast tunnel identification information on the T-RAN side that is carried in the multicast tunnel establishment request in S1003, to request the M-UPF network element to establish or modify a tunnel used by the M-UPF network element to send the multicast data to the T-RAN. The session establishment request or the session modification request may include one or more of the following information: the multicast tunnel identification information on the T-RAN side or identification information of the multicast session.

Then, the M-SMF network element receives a session establishment response or a session modification response from the M-UPF network element. The session establishment response or the session modification response may carry indication information indicating that the tunnel used by the M-UPF network element to send the multicast data to the T-RAN is successfully established.

S1005: The M-SMF network element sends a multicast tunnel establishment response to the AMF network element.

The multicast tunnel establishment response may include tunnel identification information, such as a TID, a TEID, or an IP address, on an M-UPF network element side.

S1006: The AMF network element sends an N2 response to the T-RAN.

For a specific implementation of S 1006, refer to S706. Details are not described herein again.

In this way, a multicast data transmission tunnel from the M-UPF network element → the T-RAN may be established. After the UE is handed over from the S-RAN to the T-RAN, the UE may continue to receive the multicast data through the T-RAN, to avoid service interruption.

It should be noted that in the communication method examples shown in FIG. 5A and FIG. 5B to FIG. 10, the SMF network element and the M-SMF network element may be a same session management network element, and interaction between the SMF network element and the M-SMF network element may be simplified as an internal operation of the session management network element. Similarly, the UPF network element and the M-UPF network element may alternatively be a same user plane network element, and interaction between the UPF network element and the M-UPF network element may be simplified as an internal operation of the user plane network element.

Based on the communication method shown in any one of FIG. 3 or FIG. 5A and FIG. 5B to FIG. 10, after receiving the request message for adding the first terminal to the multicast session, the first session management network element may send the second information based on the first information, where the second information is for requesting the first user plane network element to send the multicast data to the first terminal not through the first unicast session, requesting the first user plane network element not to establish the second tunnel for sending the multicast data from the data network to the first user plane network element, or requesting the second session management network element not to establish the third tunnel for sending the multicast data from the data providing network element to the first user plane network element. In this way, in a scenario in which the access network device of the first terminal already has a tunnel for receiving the multicast data, the first user plane network element does not repeatedly send the multicast data to the access network device, or does not establish a tunnel used by the first user plane network element to receive the multicast data. This can resolve a problem that the same multicast data is repeatedly transmitted through different network paths because it is separately forwarded by a plurality of user plane network elements, so that the transmission resources are saved, and the data transmission efficiency is improved.

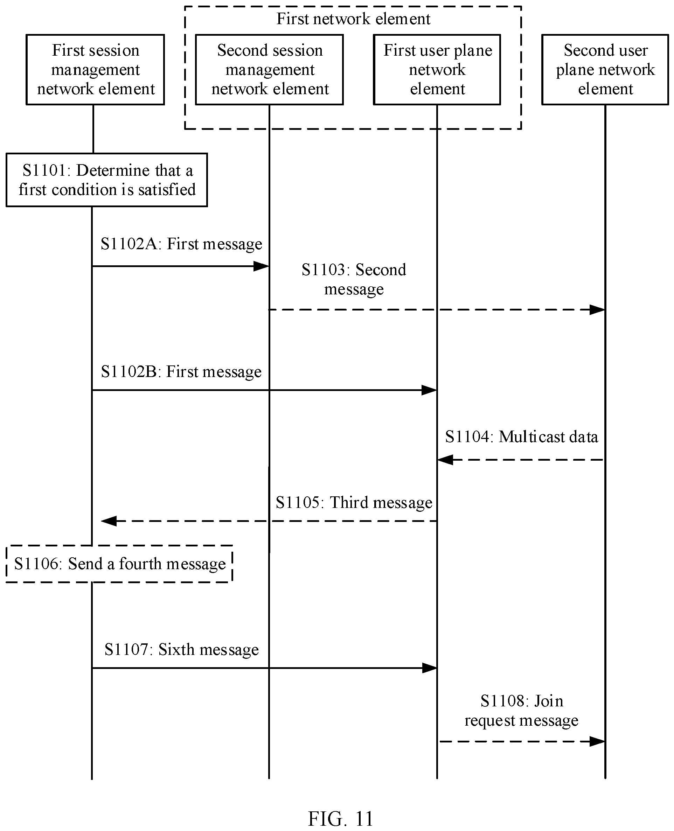

For example, FIG. 11 is an eighth schematic flowchart of a communication method according to an embodiment of this application. The communication method may be applied to the communication system shown in FIG. 1 or FIG. 2. The following uses the communication system shown in FIG. 1 as an example for description.

As shown in FIG. 11, the communication method includes the following steps.

51101: The first session management network element determines that a first condition is satisfied.

The first condition includes one or more of the following: A first terminal device is in idle mode; a second unicast session is deactivated, where the second unicast session is associated with a multicast session that a first terminal device joins; a serving access network device of a first terminal device does not support a multicast mode; or the first session management network element determines to transmit multicast data in a unicast mode.

Specifically, that a first terminal device is in idle mode (a condition 1) may include: The first terminal device is powered off; the first terminal device is set to an offline mode; the first terminal device has moved out of a coverage area of a wireless network, to be specific, the first terminal device is in a state of failing to receive multicast data; or the first terminal device is set by a network to an idle mode because the first terminal device does not interact with the network for a long time period.

That a second unicast session is deactivated (a condition 2) means: A unicast session resource for transmitting the multicast data for the first terminal device has been unavailable. As a result, the first terminal device cannot receive the multicast data.

That a serving access network device of the first terminal device does not support multicast (a condition 3) may include: The first terminal device enters a coverage area of the serving access network device that does not support multicast. As a result, the first terminal device cannot continue to receive the multicast data in a manner of receiving the multicast data before the first terminal device enters the coverage area of the serving access network device.

In other words, the terminal device that satisfies one or more of the foregoing condition 1 to condition 3 is in the state of failing to receive the multicast data.

That the first session management network element determines to transmit multicast data in a unicast mode (a condition 4) may include: A session management network element, for example, the first session management network element, of the first terminal device has determined to transmit the multicast data in the unicast mode. Therefore, optionally, that the first session management network element determines to transmit multicast data in a unicast mode may include: If a quantity of terminal devices that have accessed the serving access network device of the first terminal device and have joined the multicast session is less than or equal to a quantity threshold, the first session management network element determines to transmit the multicast data in the unicast mode. The quantity threshold may be 5. To be specific, if the quantity of terminal devices that have accessed the same serving access network device and have joined the same multicast session is less than or equal to 5, the multicast data may be separately sent to the terminal devices in the unicast mode.

Optionally, before performing S 1101 in which the first session management network element determines that the first condition is satisfied, the first session management network element may further perform the following step: The first session management network element obtains various information related to the first condition.

Specifically, the first session management network element may receive a fifth message. The fifth message is for notifying one or more of the following information: The first terminal device is in idle mode, the second unicast session is deactivated, the serving access network device of the first terminal device does not support the multicast mode, or the quantity of terminal devices that have accessed the serving access network device of the first terminal device and have joined the multicast session is less than or equal to the quantity threshold.

For example, the first session management network element may be the SMF network element shown in FIG. 2, the first terminal device may be the UE shown in FIG. 2, and the second unicast session may include the PDU session, between the UE and the UPF network element, shown in FIG. 2. The fifth message may be a PDU session update session management context request (Nsmf_PDUSession_UpdateSMContext Request) message or an event exposure notification (Namf_EventExposure_Notify) message. This is not specifically limited in this embodiment of this application.

It should be noted that various types of information in the fifth message may be separate information elements (information elements, IEs), or may be implicit information. An indication manner corresponding to each of the foregoing types of information is not specifically limited in this embodiment of this application. For example, the information indicating that the UE is in idle mode may be a separate UE status information element in the fifth message, or may be implicitly indicated by a message name of the fifth message. For another example, the information indicating that the second unicast session is deactivated (deactivation) may be a separate status information element for the second unicast session in the fifth message, or may be implicitly indicated by a message name of the fifth message.

In addition, the first session management network element may obtain one or more of the foregoing information in one or more of the following manners. For example, the first session management network element may obtain, from one or more devices/network elements in the UE, the serving access network device of the UE, or a mobility management network element, the information indicating that the UE is in idle mode.

For another example, the first session management network element may obtain, from one or more devices/network elements in the serving access network device of the UE, a mobility management network element, a multicast session management network element, a multicast user plane network element, a UDM network element, or a UDR network element, the information indicating that the second unicast session is deactivated.

S1102: The first session management network element sends a first message to a first network element, and the first network element receives the first message from the first session management network element.

The first network element may be the second session management network element or the first user plane network element, the first message is for requesting to establish or activate a fourth tunnel, and the fourth tunnel is used by a second user plane network element to send the multicast data to the first user plane network element. The first user plane network element is a unicast user plane network element corresponding to the first session management network element, and the second user plane network element is a multicast user plane network element corresponding to the second session management network element. The following separately provides descriptions.

In a possible design solution, the first network element may be the second session management network element. S1102 in which the first session management network element sends the first message to the first network element and the first network element receives the first message from the first session management network element may include S1102A:

S1102A: The first session management network element sends the first message to the second session management network element, and the second session management network element receives the first message from the first session management network element.

The first message is used by the second session management network element to establish the fourth tunnel. Alternatively, optionally, the first message is used by the second session management network element to request the second user plane network element to send the multicast data to the first user plane network element through the fourth tunnel. Therefore, optionally, the first message may include fourth tunnel information, and the fourth tunnel information is for requesting the second session management network element to establish the fourth tunnel, for example, to perform S1103. Alternatively, optionally, the fourth tunnel information is used by the second session management network element to request the second user plane network element to send the multicast data to the first user plane network element, to be specific, to activate the fourth tunnel, for example, to perform S1103. In other words, based on the first message, the second session management network element may establish a new multicast data transmission tunnel or activate a deactivated multicast data transmission tunnel, so that the first terminal device receives the multicast data.

For example, the fourth tunnel information may include one or more of the following: a tunnel identifier or a tunnel endpoint identifier of the fourth tunnel, an IP address or a port number of the first user plane network element, an IP address or a port number of the second user plane network element, or the like.

It should be noted that the first session management network element may obtain the fourth tunnel information in one or more of the following manners: The first session management network element obtains the fourth tunnel information by using an address pool corresponding to pre-allocated tunnel identification information; or the first user plane network element provides the fourth tunnel information. For example, the first session management network element sends a request message to the first user plane network element, where the request message is for requesting the first user plane network element to provide the fourth tunnel information. Correspondingly, the first user plane network element receives the request message, and sends the fourth tunnel information to the first session management network element.

Optionally, the first message may further include one or more of the following: identification information of a multicast group or first quality of service information such as a data forwarding rule for the multicast data, an identification rule for the multicast data, or a usage reporting rule (usage reporting rule, URR) for the multicast data.

For example, the first session management network element may further obtain the identification information of the multicast group that the first terminal device joins. For example, the first session management network element obtains, based on a locally stored correspondence between identification information of the first terminal device and the identification information of the multicast group, the identification information of the multicast group that the first terminal device joins. The identification information of the first terminal device may include one or more of the following: a generic public subscription identifier (generic public subscription identifier, GPSI), a subscription permanent identifier (subscription permanent identifier, SUPI), a globally unique temporary identity (globally unique temporary identity, GUTI), a subscription concealed identifier (subscription concealed identifier, SUCI), or other information that can identify the first terminal device, for example, a session context identifier (context ID) of the first terminal device.

For example, the first session management network element may obtain the first quality of service information in one or more of the following manners: The first session management network element obtains the first quality of service information based on locally stored quality of service information, or obtains the first quality of service information based on the identification information of the multicast group. For example, the first session management network element may obtain the first quality of service information based on a locally stored correspondence between quality of service information and identification information of a multicast group.

It should be noted that the first session management network element may further determine whether the first user plane network element has established the fourth tunnel. If the fourth tunnel has been established, for example, another terminal device that have accessed the serving access network device, has triggered establishment of the fourth tunnel, the first session management network element may not send the message to the second session management network element. In other words, S 1102A may be considered as an optional step.

Alternatively, the first session management network element may send a configuration message to the first user plane network element, where the configuration message is for configuring a processing rule used when the first user plane network element receives the multicast data. That is, S 1 102B is performed. If the fourth tunnel has been established in this case, after the first session management network element receives a response message for the configuration message, for example, receives a third message in S1105, the procedure ends.

Optionally, the first session management network element may send configuration information to the first user plane network element, where the configuration information is used by the first user plane network element to identify and forward the multicast data. Therefore, the communication method shown in FIG. 11 may further include the following S1103:

S1103: The second session management network element sends a second message to the second user plane network element, and the second user plane network element receives the second message from the second session management network element.

The second message includes the fourth tunnel information, and the fourth tunnel information is for requesting the second user plane network element to establish the fourth tunnel and send the multicast data to the first user plane network element through the newly established fourth tunnel.

Optionally, the second session management network element may obtain the fourth tunnel information, and send the fourth tunnel information to the first session management network element. The fourth tunnel information is used by the first session management network element to configure the first user plane network element to receive the multicast data. Then, the first session management network element may send the configuration message, for example, an N4 session message, to the first user plane network element based on the fourth tunnel information.

Further, the fourth tunnel information may include second quality of service information, and the second quality of service information may include one or more of the following information: the forwarding rule for the multicast data, the identification rule for the multicast data, the usage reporting rule for the multicast data, or the like. The second quality of service information is used by the second user plane network element to send the multicast data to the first user plane network element.

It should be understood that, alternatively, the fourth tunnel may have been established and deactivated in a previous multicast session establishment procedure. In this case, the fourth tunnel information may alternatively be for requesting the second user plane network element to activate the fourth tunnel and send the multicast data to the first user plane network element through the activated fourth tunnel.

Optionally, the second message may further include a third rule. The third rule is for configuring the second user plane network element to send the multicast data to the first user plane network element. Content of the third rule may be determined based on the first quality of service information in the foregoing first message, and details are not described herein.

It should be noted that if the first session management network element learns that the fourth tunnel has been established and activated, S 1103 may not be performed. In other words, S 1103 may be considered as an optional step.

In another possible design solution, the first network element may be the first user plane network element. S1102 in which the first network element receives the first message from the first session management network element may include S1102B:

S1102B: The first session management network element sends a first message to the first user plane network element, and the first user plane network element receives the first message from the first session management network element.

The first message is for requesting the first user plane network element to receive the multicast data from the second user plane network element through the established fourth tunnel. The first message may include fourth tunnel information, and the fourth tunnel information is used by the first user plane network element to receive the multicast data from the second user plane network element through the fourth tunnel.

Optionally, the first message may further include a second rule. The second rule is used by the first user plane network element to receive the multicast data from the second user plane network element, and the second rule may include but is not limited to a forwarding rule for the multicast data, an identification rule for the multicast data, or a usage reporting rule for the multicast data.

For example, the first message may be an N4 session modification request (N4 session modification request) message or an N4 session establishment request (N4 session establishment request) message.

Optionally, the communication method shown in FIG. 11 may further include S1104 and S1105:

S1104: The second user plane network element sends the multicast data to the first user plane network element, and the first user plane network element receives the multicast data from the second user plane network element.

Specifically, the second user plane network element may send the multicast data to the first user plane network element in a unicast or multicast mode. The first user plane network element may receive the multicast data from the second user plane network element in the unicast or multicast mode, and buffer the multicast data, to forward the multicast data to the first terminal device when the first terminal device can receive the multicast data.

S1105: The first user plane network element sends a third message to the first session management network element, and the first session management network element receives the third message from the first user plane network element.

The third message is for notifying that the first user plane network element has received the multicast data. In this way, the first session management network element may further page the first terminal device, to notify the first terminal device to receive the multicast data. In other words, the first session management network element performs S1106.

S1106: The first session management network element sends a fourth message.

The fourth message is for paging the first terminal device or activating a user plane connection for the second unicast session.

For example, the first session management network element may send a paging message to the first terminal device through the mobility management network element and the serving access network device, and/or the first session management network element may request the first user plane network element to activate the user plane connection for the second unicast session, for example, activate the deactivated fourth tunnel, so that the first user plane network element forwards the multicast data to the first terminal device.

It should be noted that S1102 to S1106 may alternatively be replaced with the following S1107 and S1108. Details are as follows:

S1107: The first session management network element sends a sixth message to the first user plane network element, and the first user plane network element receives the sixth message from the first session management network element.

The sixth message is for requesting the first user plane network element to establish a multicast data transmission tunnel between the first user plane network element and the second user plane network element, the sixth message includes first address information, and the first address information may be an IP multicast address.

Optionally, after receiving the sixth message sent by the first session management network element, the first user plane network element determines whether the first user plane network element is receiving multicast data corresponding to the first address information. For example, if the first user plane network element has sent a request for joining a multicast group corresponding to the first address information, and has not sent a leave request, the first user plane network element determines that the first user plane network element is receiving the multicast data corresponding to the first address information. Further, if the first user plane network element is receiving the multicast data corresponding to the first address information, the first user plane network element does not need to send a join request message to the second user plane network element. In other words, S1108 may be considered as an optional step.

S1108: The first user plane network element sends the join request message to the second user plane network element, and the second user plane network element receives the join request message from the first user plane network element.

The join request message includes the first address information. Then, the second user plane network element may send, to the first user plane network element, the multicast data corresponding to the first address information.

With reference to the 5G system shown in FIG. 2, the following describes in detail the communication method shown in FIG. 11 by using an example in which the first terminal device is in idle mode.

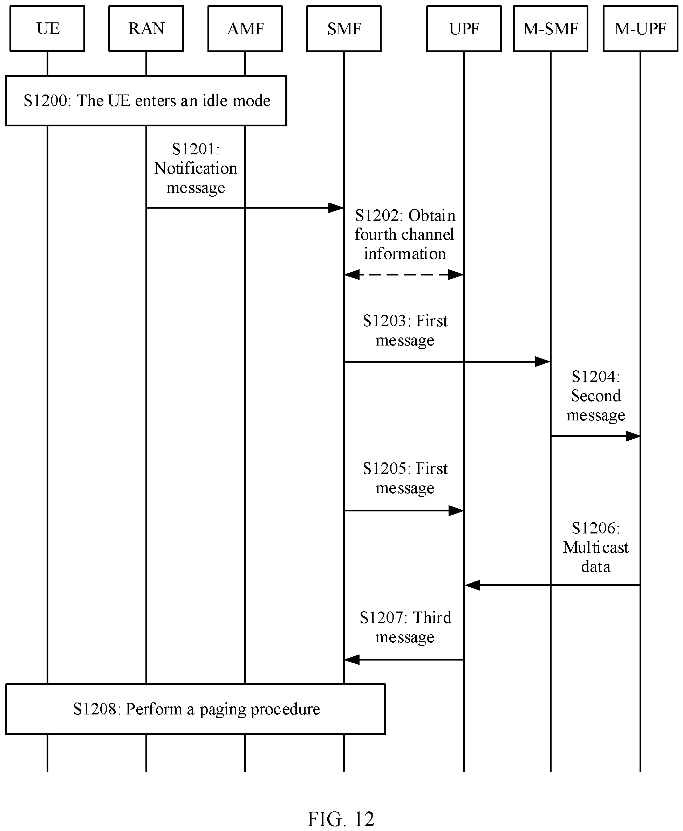

For example, FIG. 12 is a ninth schematic diagram of a communication method according to an embodiment of this application. The first session management network element shown in FIG. 11 may be an SMF network element shown in FIG. 12, the second session management network element shown in FIG. 11 may be an M-SMF network element shown in FIG. 12, the first user plane network element shown in FIG. 11 may be a UPF network element shown in FIG. 12, and the second user plane network element shown in FIG. 11 may be an M-UPF network element shown in FIG. 12. The first terminal device, the serving access network device, and the mobility management network element in the communication method shown in FIG. 11 may be respectively UE, a RAN, and an AMF network element shown in FIG. 12.

S1200: The UE enters the idle mode.

A reason why the UE enters the idle mode may include but is not limited to: The RAN detects that, within a preset time period, no downlink data is sent to the UE and/or no uplink data is received from the UE; or the RAN detects that a wireless connection to the UE fails, for example, the UE moves out of a coverage area of a wireless network or signal quality is lower than a threshold. In this case, the RAN may send a notification message to the AMF network element. The notification message may be a UE context connection release request (UE context release request) message or a UE context release complete (UE context release complete) message.

S1201: The SMF network element receives a notification message.

For example, the SMF network element may receive the notification message from the RAN through the AMF network element. The notification message is for notifying the SMF network element that the UE is in idle mode. The notification message may be a PDU session update session management context request (Nsmf_PDUSession_UpdateSMContext request) message.

Optionally, the notification message may further include indication information indicating that the UE switches to the idle mode. The indication information may be a separate information element, for example, an indication information element indicating that the UE switches to the idle mode; or may be implicit information, for example, is implicitly indicated by a message name or another information element.

S1202: The SMF network element obtains fourth tunnel information from the UPF network element.

The fourth tunnel information is used by the M-UPF network element to send multicast data to the UPF network element, and may include but is not limited to a TID, a TEID, an IP address, or the like of a fourth tunnel.

Optionally, the SMF network element may obtain the fourth tunnel information in one or more of the following manners: The SMF network element generates the fourth tunnel information, or the SMF network element obtains the fourth tunnel information from the UPF network element, a UDR network element, or a UDM network element.

For example, the SMF network element obtains the fourth tunnel information from the UPF network element. Details may be as follows: The SMF network element sends an N4 session configuration request message to the UPF network element, and receives an N4 configuration response message from the UPF network element. The N4 session configuration request message is for requesting the fourth tunnel information, and the N4 configuration response message includes the fourth tunnel information.

It should be noted that, the SMF network element may further obtain other information in addition to the fourth tunnel information from the UPF network element. Furthermore, the SMF network element may alternatively obtain the fourth tunnel information and other information related to the first condition from another network element, for example, the UDR network element or the UDM network element. For a specific implementation, refer to S1101. Details are not described herein again.

S1203: The SMF network element sends a first message to the M-SMF network element, and the M-SMF network element receives the first message from the SMF network element.

The first message includes the fourth tunnel information. Optionally, the first message may further include information indicating that the UE is in idle mode. The information indicating that the UE is in idle mode may be a separate information element, for example, an information element indicating that the UE switches to the idle mode; or may be implicit information, for example, is implicitly indicated by a name of the first message or another information element in the first message.

Optionally, before S1203 in which the SMF network element sends the first message to the M-SMF network element and the M-SMF network element receives the first message from the SMF network element, the method shown in FIG. 12 may further include: The SMF network element determines whether the fourth tunnel has been established between the M-UPF network element and the UPF network element.

In a possible design solution, if the fourth tunnel is not established, or the fourth tunnel is established and deactivated, the M-SMF network element may configure the M-UPF network element to establish or activate the fourth tunnel and to send the multicast data to the UPF network element through the fourth tunnel. To be specific, the method shown in FIG. 12 may further include the following step:

S1204: The M-SMF network element sends a second message to the M-UPF network element, and the M-UPF network element receives the second message from the M-SMF network element.

For content of the second message, refer to S1103, and details are not described herein again.

In another possible design solution, if the fourth tunnel is established and activated, for example, other UE in idle mode has triggered establishment of the fourth tunnel, the fourth tunnel is not per UE (per UE) but per node (per node). For example, the M-UPF network element is a same M-UPF network element that provides a same multicast data transmission service for a plurality of UEs. In other words, in this case, the UPF network element has received the multicast data, and the SMF network element may not send the first message to the M-SMF network element, that is, not perform S1203. In this case, the SMF network element may send a configuration message to the UPF network element, to configure a processing rule, for example, buffering the multicast data and notifying the SMF network element, that is used when the UPF network element receives the multicast data. To be specific, the method shown in FIG. 12 may further include the following steps.

S1205: The SMF network element sends a first message to the UPF network element, and the UPF network element receives the first message from the SMF network element.

For content of the first message, refer to S1102B, and details are not described herein again.

S1206: The M-UPF network element sends the multicast data to the UPF network element, and the UPF network element receives the multicast data from the M-UPF network element.

For a specific implementation, refer to the implementation in which the second user plane network element sends the multicast data to the first user plane network element in S1104. Details are not described herein again.

S1207: The UPF network element sends a third message to the SMF network element, and the SMF network element receives the third message from the UPF network element.

For a specific implementation of the third message, refer to S 1105. Details are not described herein again.

S1208: Perform a paging procedure.

For example, the SMF network element may send a fourth message to the AMF network element and the RAN. For a specific implementation of the fourth message, refer to S1106. The fourth message is for requesting the AMF network element and the RAN to page the UE, so that the UE receives the multicast data from the UPF network element. For a specific implementation of the paging procedure, refer to an existing implementation. Details are not described in this embodiment of this application.

Based on the communication method shown in FIG. 11 or FIG. 12, when the first terminal device cannot receive the multicast data in time, if the first condition is satisfied, the first session management network element may request the first network element to establish or activate the fourth tunnel, so that the first user plane network element replaces the first terminal device to receive the multicast data from the second user plane network element, buffers the multicast data, and forwards the multicast data to the first terminal device when the first terminal device can receive the multicast data. In this way, the second user plane network element and another terminal device that joins the multicast session transmit the multicast data without waiting for the first terminal device to be capable of receiving the multicast data. This can greatly reduce a delay in receiving the multicast data by the another terminal device, to improve efficiency of transmitting the multicast data. In addition, the first terminal device may receive the multicast data from the first user plane network element when the first terminal device can receive the multicast data, to ensure reliability of receiving the multicast data by the first terminal device. This balances both overall efficiency of transmitting the multicast data and reliability of receiving a multicast service by a part of terminal devices.

In addition, in the communication method shown in FIG. 11 or FIG. 12, resource overheads for buffering the multicast data by the multicast user plane network element to wait for a part of terminal devices to restore a capability of receiving the multicast data can be reduced, so that load of the multicast user plane network element can be reduced, thereby further improving the efficiency of transmitting the multicast data.

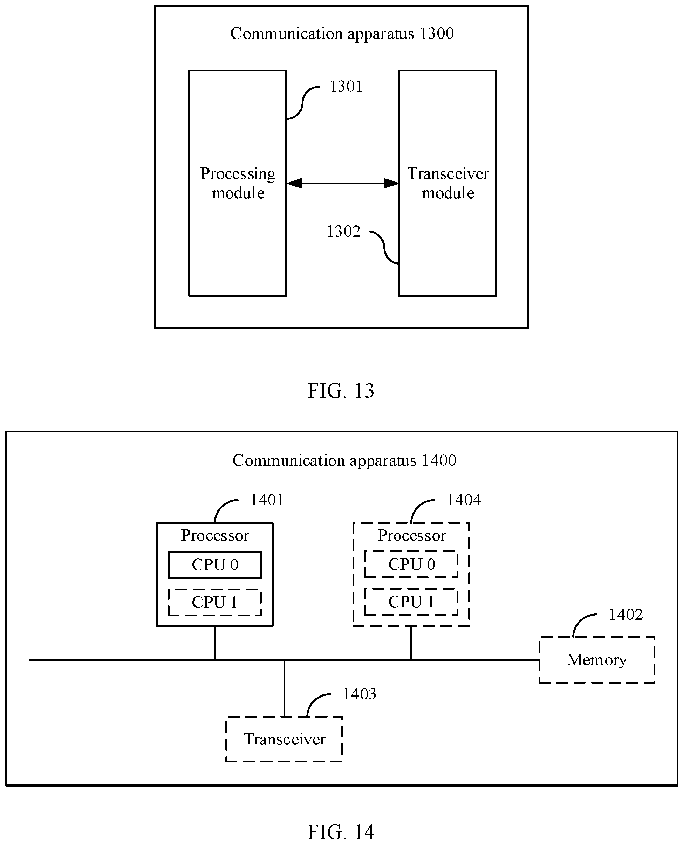

With reference to FIG. 3 to FIG. 12, the foregoing describes in detail the communication method provided in embodiments of this application. With reference to FIG. 13 and FIG. 14, the following describes in detail communication apparatuses provided in embodiments of this application.

For example, FIG. 13 is a first schematic diagram of a structure of a communication apparatus 1300 according to an embodiment of this application. As shown in FIG. 13, the communication apparatus 1300 includes a processing module 1301 and a transceiver module 1302. For ease of description, FIG. 13 shows only main components of the communication apparatus 1300.

In some embodiments, the communication apparatus 1300 may be used in the communication system shown in FIG. 1 or FIG. 2, and perform a function of the first session management network element in the communication method shown in FIG. 3 or a function of the SMF network element in the communication method shown in any one of FIG. 5A and FIG. 5B to FIG. 10.

The transceiver module 1302 is configured to receive a request message through a first unicast session, where the request message is for adding a first terminal to a multicast group.

The processing module 1301 is configured to control, based on first information, the transceiver module 1302 to send second information. The second information is for requesting a first user plane network element to send multicast data not through the first unicast session. Alternatively, the second information is for requesting a first user plane network element not to send first signaling to a data network, the first signaling is for establishing a second tunnel, and the second tunnel is used by the data network to send multicast data to the first user plane network element. Alternatively, the second information is for requesting a second session management network element not to send second signaling to a data providing network element, the second signaling is for establishing a third tunnel, and the third tunnel is used by the data providing network element to send multicast data to a first user plane network element. The first user plane network element is a user plane network element corresponding to the first unicast session.

In a possible design solution, the second information is for requesting to send the multicast data not through the first unicast session, and the first information includes at least one of the following: first tunnel information, first capability information, or a first rule. The first tunnel information indicates that an access network device of the first terminal has a tunnel for receiving the multicast data. The first capability information indicates that the access network device of the first terminal supports multicast. The first rule indicates that the first unicast session is for transmitting the multicast data.

Optionally, the transceiver module 1302 is further configured to send third information to the first user plane network element after the first terminal is handed over to a target access network device, where the third information is used by the first user plane network element to send the multicast data to the target access network device. The target access network device does not support multicast, or does not have a tunnel for receiving the multicast data.

In another possible design solution, the second information is for requesting the first user plane network element not to send the first signaling to the data network, and the first information includes at least one of the following: first tunnel information, second tunnel information, second capability information, third tunnel information, or a first rule. The first tunnel information indicates that an access network device of the first terminal has a tunnel for receiving the multicast data. The second tunnel information indicates that the data network has a tunnel for sending the multicast data to the first user plane network element. The second capability information indicates that the data network does not support multicast. The third tunnel information indicates that the data providing network element has a tunnel for sending the multicast data to the first user plane network element. The first rule indicates that the first unicast session is for transmitting the multicast data.

Optionally, the transceiver module 1302 is further configured to send fourth information to the first user plane network element after the first terminal is handed over to a target access network device, where the fourth information is for requesting the first user plane network element to send the first signaling to the data network. The target access network device does not support multicast, or does not have the second tunnel.

In still another possible design solution, the second information is for requesting the second session management network element not to send the second signaling to the data providing network element, and the first information includes at least one of the following: first tunnel information, first capability information, second tunnel information, third tunnel information, third capability information, or a first rule. The first tunnel information indicates that an access network device of the first terminal has a tunnel for receiving the multicast data. The first capability information indicates that the access network device of the first terminal supports multicast. The second tunnel information indicates that the data network has a tunnel for sending the multicast data to the first user plane network element. The third tunnel information indicates that the data providing network element has a tunnel for sending the multicast data to the first user plane network element. The third capability information indicates that the data providing network element does not support multicast. The first rule indicates that the first unicast session is for transmitting the multicast data.

Optionally, the transceiver module 1302 is further configured to send fifth information to the second session management network element after the first terminal is handed over to a target access network device, where the fifth information is used by the second session management network element to request a second user plane network element corresponding to the second session management network element to send the multicast data to the first user plane network element or the target access network device. The target access network device does not support multicast, or does not have a tunnel for receiving the multicast data.

Further, the fifth information may include tunnel information on a target access network device side or tunnel information on a first user plane network element side.

Optionally, the transceiver module 1302 is further configured to receive the tunnel information on the target access network device side from a mobility management network element for the first terminal or a centralized storage network element.

Optionally, the transceiver module 1302 is further configured to receive the tunnel information on the first user plane network element side from the first user plane network element or a centralized storage network element.

It should be noted that, in correspondence with the foregoing solution, in another possible design solution, after the transceiver module 1302 receives a request message for adding a first terminal to a multicast session, the processing module 1301 is alternatively configured to control, based on first information, the transceiver module 1302 to send seventh information. The seventh information is for requesting a first user plane network element to send multicast data, for example, through a first unicast session or not through a first unicast session. Alternatively, the seventh information is for requesting a first user plane network element to send first signaling to a data network, the first signaling is for establishing a second tunnel, and the second tunnel is used by the data network to send multicast data to the first user plane network element. Alternatively, the seventh information is for requesting a second session management network element to send second signaling to a data providing network element, the second signaling is for establishing a third tunnel, and the third tunnel is used by the data providing network element to send multicast data to a first user plane network element. The first user plane network element is a user plane network element corresponding to the first unicast session. In this design solution, the first information may need to include one or more of the following information: first tunnel information, first capability information, second tunnel information, second capability information, third tunnel information, third capability information, or a first rule. The first tunnel information indicates that an access network device of the first terminal does not have a tunnel for receiving the multicast data. The first capability information indicates that the access network device of the first terminal does not support multicast. The second tunnel information indicates that the data network does not have a tunnel for sending the multicast data to the first user plane network element. The second capability information indicates that the data network supports multicast. The third tunnel information indicates that the data providing network element does not have a tunnel for sending the multicast data to the first user plane network element. The third capability information is for requesting that the data providing network element supports multicast. The first rule indicates that the first unicast session is for transmitting the multicast data.

It should be noted that a receiving function and a sending function performed by the transceiver module 1302 may alternatively be performed by different modules, for example, a receiving module and a sending module (not separately shown in FIG. 13). An implementation of the transceiver module 1302 is not specifically limited in this application.

Optionally, the communication apparatus 1300 may further include a storage module (not shown in FIG. 13). The storage module stores a program or instructions. When the processing module 1301 executes the program or the instructions, the communication apparatus 1300 is enabled to perform the communication method shown in any one of FIG. 3 or FIG. 5A and FIG. 5B to FIG. 10.

It should be noted that the communication apparatus 1300 may be the first session management network element shown in FIG. 3, the SMF network element shown in any one of FIG. 5A and FIG. 5B to FIG. 10, or a chip (system) or another part or component that can be configured in the first session management network element or the SMF network element. This is not limited in this application.

In addition, for technical effects of the communication apparatus 1300, refer to the technical effects of the communication method shown in any one of FIG. 3 or FIG. 5A and FIG. 5B to FIG. 10. Details are not described herein again.

In some other embodiments, the communication apparatus 1300 may be used in the communication system shown in FIG. 1 or FIG. 2, and perform a function of the first session management network element in the communication method shown in FIG. 11 or a function of the SMF network element in the communication method shown in FIG. 12.

The processing module 1301 is configured to determine that a first condition is satisfied. The first condition includes one or more of the following: A first terminal device is in idle mode; a second unicast session is deactivated, where the second unicast session is associated with a multicast session that a first terminal device joins; a serving access network device of a first terminal device does not support a multicast mode; or the communication apparatus 1300 determines to transmit multicast data in a unicast mode. The transceiver module 1302 is configured to send a first message to a first network element. The first message is for requesting to establish a fourth tunnel, or is for requesting to transmit the multicast data through a fourth tunnel, the fourth tunnel is used by a second user plane network element to send the multicast data to a first user plane network element, the multicast data is data on the multicast session that the first terminal device requests to receive, and the first user plane network element is configured to provide the multicast data for the first terminal device.

Optionally, the processing module 1301 is further configured to: if a quantity of terminal devices that have accessed the serving access network device of the first terminal device and have joined the multicast session is less than or equal to a quantity threshold, determine to transmit the multicast data in the unicast mode.

In a possible design solution, the first network element may be a second session management network element, the first message may include fourth tunnel information, and the fourth tunnel information is for requesting the second session management network element to establish the fourth tunnel.

In another possible design solution, the first network element may be the first user plane network element, the first user plane network element may be a unicast user plane network element corresponding to the communication apparatus 1300, the first message may include a second rule, the second rule is used by the first user plane network element to receive the multicast data from a second user plane network element, and the second user plane network element may be a multicast user plane network element corresponding to the multicast session.

Further, the transceiver module 1302 is configured to receive a third message from the first user plane network element, where the third message is for notifying that the first user plane network element has received the multicast data. The transceiver module 1302 is further configured to send a fourth message, where the fourth message is for paging the first terminal device or activating a user plane connection for the second unicast session.

It should be noted that the transceiver module 1302 may alternatively be configured into separate modules, for example, configured into a receiving module and a sending module (not separately shown in FIG. 13). The receiving module is configured to perform a receiving function, and the sending module is configured to perform a sending function. An implementation of the transceiver module 1302 is not specifically limited in this application.

Optionally, the communication apparatus 1300 may further include a storage module (not shown in FIG. 13). The storage module stores a program or instructions. When the processing module 1301 executes the program or the instructions, the communication apparatus 1300 is enabled to perform the communication method shown in FIG. 11 or FIG. 12.

It should be noted that the communication apparatus 1300 may be the unicast session management network element shown in FIG. 11, the SMF network element shown in FIG. 12, or a chip (system) or another part or component that can be configured in the unicast session management network element or the SMF network element. This is not limited in this application.

In addition, for technical effects of the communication apparatus 1300, refer to the technical effects of the communication method shown in FIG. 11 or FIG. 12. Details are not described herein again.

In some other embodiments, the communication apparatus 1300 may be used in the communication system shown in FIG. 1 or FIG. 2, and perform a function of the second session management network element in the communication method shown in FIG. 11 or a function of the M-SMF network element in the communication method shown in FIG. 12.

The transceiver module 1302 is configured to receive a first message from a first session management network element.

The processing module 1301 is configured to establish, based on the first message, a fourth tunnel used by a second user plane network element to send multicast data to a first user plane network element.

Alternatively, the processing module 1301 is configured to request, based on the first message, a second user plane network element to send multicast data to a first user plane network element through a fourth tunnel.

The multicast data is data on a multicast session that a first terminal device requests to receive, the first user plane network element is configured to provide the multicast data for the first terminal device, the first user plane network element is a unicast user plane network element corresponding to the first session management network element, and the second user plane network element is a multicast user plane network element corresponding to the apparatus 1300.

In a possible design solution, the first message includes fourth tunnel information, and the fourth tunnel information is for establishing the fourth tunnel.

Optionally, the transceiver module 1302 is further configured to send a second message to the second user plane network element, where the second message includes the fourth tunnel information.

Further, the second message may include a third rule, and the third rule is for configuring the second user plane network element to send the multicast data to the first user plane network element.

It should be noted that the transceiver module 1302 may alternatively be configured into separate modules, for example, configured into a receiving module and a sending module (not separately shown in FIG. 13). The receiving module is configured to perform a receiving function, and the sending module is configured to perform a sending function. An implementation of the transceiver module 1302 is not specifically limited in this application.

Optionally, the communication apparatus 1300 may further include a storage module (not shown in FIG. 13). The storage module stores a program or instructions. When the processing module 1301 executes the program or the instructions, the communication apparatus 1300 is enabled to perform the communication method shown in FIG. 11 or FIG. 12.

It should be noted that the communication apparatus 1300 may be the multicast session management network element shown in FIG. 11, the M-SMF network element or the UPF network element shown in FIG. 12, or a chip (system) or another part or component that can be configured in the multicast session management network element, the M-SMF network element, or the UPF network element. This is not limited in this application.

In addition, for technical effects of the communication apparatus 1300, refer to the technical effects of the communication method shown in FIG. 11 or FIG. 12. Details are not described herein again.

For example, FIG. 14 is a second schematic diagram of a structure of a communication apparatus according to an embodiment of this application. The communication apparatus may be the first session management network element, the second session management network element, the first network element, or the communication apparatus 1300, or may be a chip (system) or another part or component that can be configured in the first session management network element, the second session management network element, the first network element, or the communication apparatus 1300.

As shown in FIG. 14, the communication apparatus 1400 may include a processor 1401. Optionally, the communication apparatus 1400 may further include a memory 1402 and/or a transceiver 1403. The processor 1401 is coupled to the memory 1402 and the transceiver 1403, for example, may be connected to the memory 1402 and the transceiver 1403 through a communication bus.

The following specifically describes the components of the communication apparatus 1400 with reference to FIG. 14.

The processor 1401 is a control center of the communication apparatus 1400, and may be one processor or may be a general name of a plurality of processing elements. For example, the processor 1401 is one or more central processing units (central processing units, CPUs) or an application-specific integrated circuit (application-specific integrated circuit, ASIC), or is configured as one or more integrated circuits for implementing embodiments of this application, for example, one or more digital signal processors (digital signal processors, DSPs) or one or more field programmable gate arrays (field programmable gate arrays, FPGAs).

The processor 1401 may perform various functions of the communication apparatus 1400 by running or executing a software program stored in the memory 1402 and invoking data stored in the memory 1402.

During specific implementation, in an embodiment, the processor 1401 may include one or more CPUs, for example, a CPU 0 and a CPU 1 shown in FIG. 14.

During specific implementation, in an embodiment, the communication apparatus 1400 may include a plurality of processors, for example, the processor 1401 and a processor 1404 shown in FIG. 14. Each of the processors may be a single-core (single-CPU) processor or may be a multi-core (multi-CPU) processor. The processor herein may be one or more communication devices, circuits, and/or processing cores configured to process data (for example, computer program instructions).

The memory 1402 may be a read-only memory (read-only memory, ROM) or another type of static storage communication device that can store static information and instructions, a random access memory (random access memory, RAM) or another type of dynamic storage communication device that can store information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage communication device, or any other medium that can be used for carrying or storing expected program code in a form of an instruction or a data structure and that can be accessed by a computer. However, the memory 1402 is not limited thereto. The memory 1402 may be integrated with the processor 1401; or may exist independently, and is coupled to the processor 1401 through an input/output port (not shown in FIG. 14) of the communication apparatus 1400. This is not specifically limited in this embodiment of this application.

The memory 1402 is configured to store a software program for executing the solutions of this application, and the processor 1401 controls the execution. For a specific implementation, refer to the foregoing method embodiments. Details are not described herein again.

The transceiver 1403 is configured to communicate with another communication apparatus. For example, the communication apparatus 1400 is an SMF, and the transceiver 1403 may be configured to communicate with another core network element, for example, a user plane network element, an AMF network element, another session management network element, a PCF network element, a UDM network element, or a UDR network element. Optionally, the transceiver 1403 may include a receiver and a transmitter (not separately shown in FIG. 14). The receiver is configured to implement a receiving function, and the transmitter is configured to implement a sending function. Optionally, the transceiver 1403 may be integrated with the processor 1401; or may exist independently, and is coupled to the processor 1401 through the input/output port (not shown in FIG. 14) of the communication apparatus 1400. This is not specifically limited in this embodiment of this application.

It should be noted that the structure of the communication apparatus 1400 shown in FIG. 14 does not constitute a limitation on the communication apparatus. An actual communication apparatus may include more or fewer components than those shown in the figure, combine some components, or have different component arrangement.

An embodiment of this application provides a communication system. The communication system includes one or more terminal devices, one or more access network devices, and one or more core network elements such as a session management network element and a user plane network element.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of random access memories (random access memories, RAMs) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wireless (for example, infrared, radio, microwave, or the like) manner. The computer-readable storage medium may be any usable medium accessible by a computer or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects, and indicates that three relationships may exist. For example, A and/or B may indicate the following three cases: Only A exists, both A and B exist, and only B exists. A and B may be singular or plural. In addition, the character "/" in this specification usually indicates an "or" relationship between associated objects, or may indicate an "and/or" relationship. A specific meaning depends on the context.

In this application, "at least one" means one or more, and "a plurality of" means two or more. The term "at least one item (piece) of the following" or a similar expression thereof refers to any combination of these items, and includes a single item (piece) or any combination of a plurality of items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use a different method to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, the functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a first session management network element, a request message through a first unicast session, wherein the request message is for adding a first terminal to a multicast group; and
sending, by the first session management network element, second information based on first information, wherein
the second information is for requesting a first user plane network element to send multicast data not through the first unicast session;
the second information is for requesting a first user plane network element not to send first signaling to a data network, the first signaling is for establishing a second tunnel, and the second tunnel is used by the data network to send multicast data to the first user plane network element; or
the second information is for requesting a second session management network element not to send second signaling to a data providing network element, the second signaling is for establishing a third tunnel, and the third tunnel is used by the data providing network element to send multicast data to a first user plane network element, wherein
the first user plane network element is a user plane network element corresponding to the first unicast session.

2. The communication method according to claim 1, wherein the second information is for requesting to send the multicast data not through the first unicast session, and the first information comprises at least one of the following: first tunnel information, first capability information, or a first rule, wherein
the first tunnel information indicates that an access network device of the first terminal has a tunnel for receiving the multicast data;
the first capability information indicates that the access network device of the first terminal supports multicast; and
the first rule indicates that the first unicast session is for transmitting the multicast data.

3. The communication method according to claim 2, wherein the method further comprises:
sending, by the first session management network element, third information to the first user plane network element after the first terminal is handed over to a target access network device, wherein the third information is used by the first user plane network element to send the multicast data to the target access network device, wherein
the target access network device does not support multicast, or does not have a tunnel for receiving the multicast data.

4. The communication method according to claim 1, wherein the second information is for requesting the first user plane network element not to send the first signaling to the data network, and the first information comprises at least one of the following: first tunnel information, second tunnel information, second capability information, third tunnel information, or a first rule, wherein
the first tunnel information indicates that an access network device of the first terminal has a tunnel for receiving the multicast data;
the second tunnel information indicates that the data network has a tunnel for sending the multicast data to the first user plane network element;
the second capability information indicates that the data network does not support multicast;
the third tunnel information indicates that the data providing network element has a tunnel for sending the multicast data to the first user plane network element; and
the first rule indicates that the first unicast session is for transmitting the multicast data.

5. The communication method according to claim 4, wherein the method further comprises:
sending, by the first session management network element, fourth information to the first user plane network element after the first terminal is handed over to a target access network device, wherein the fourth information is for requesting the first user plane network element to send the first signaling to the data network, wherein
the target access network device does not support multicast, or does not have the second tunnel.

6. The communication method according to claim 1, wherein the second information is for requesting the second session management network element not to send the second signaling to the data providing network element, and the first information comprises at least one of the following: first tunnel information, first capability information, second tunnel information, third tunnel information, third capability information, or a first rule, wherein
the first tunnel information indicates that an access network device of the first terminal has a tunnel for receiving the multicast data;
the first capability information indicates that the access network device of the first terminal supports multicast;
the second tunnel information indicates that the data network has a tunnel for sending the multicast data to the first user plane network element;
the third tunnel information indicates that the data providing network element has a tunnel for sending the multicast data to the first user plane network element;
the third capability information indicates that the data providing network element does not support multicast; and
the first rule indicates that the first unicast session is for transmitting the multicast data.

7. The communication method according to claim 6, wherein the method further comprises sending, by the first session management network element, fifth information to the second session management network element after the first terminal is handed over to a target access network device, wherein the fifth information is used by the second session management network element to request a second user plane network element corresponding to the second session management network element to send the multicast data to the first user plane network element or the target access network device, wherein
the target access network device does not support multicast, or does not have a tunnel for receiving the multicast data.

8. The communication method according to claim 7, wherein the fifth information comprises tunnel information on a target access network device side or tunnel information on a first user plane network element side.

9. The communication method according to claim 8, wherein the method further comprises:
receiving, by the first session management network element, the tunnel information on the target access network device side from a mobility management network element for the first terminal or a centralized storage network element.

10. The communication method according to claim 8, wherein the method further comprises:
receiving, by the first session management network element, the tunnel information on the first user plane network element side from the first user plane network element or a centralized storage network element.

11. A communication apparatus, comprising a processing module and a transceiver module, wherein
the transceiver module is configured to receive a request message through a first unicast session, wherein the request message is for adding a first terminal to a multicast group; and
the processing module is configured to control, based on first information, the transceiver module to send second information, wherein
the second information is for requesting a first user plane network element to send multicast data not through the first unicast session;
the second information is for requesting a first user plane network element not to send first signaling to a data network, the first signaling is for establishing a second tunnel, and the second tunnel is used by the data network to send multicast data to the first user plane network element; or
the second information is for requesting a second session management network element not to send second signaling to a data providing network element, the second signaling is for establishing a third tunnel, and the third tunnel is used by the data providing network element to send multicast data to a first user plane network element, wherein
the first user plane network element is a user plane network element corresponding to the first unicast session.

12. The communication apparatus according to claim 11, wherein the second information is for requesting to send the multicast data not through the first unicast session, and the first information comprises at least one of the following: first tunnel information, first capability information, or a first rule, wherein
the first tunnel information indicates that an access network device of the first terminal has a tunnel for receiving the multicast data;
the first capability information indicates that the access network device of the first terminal supports multicast; and
the first rule indicates that the first unicast session is for transmitting the multicast data.

13. The communication apparatus according to claim 12, wherein
the transceiver module is further configured to send third information to the first user plane network element after the first terminal is handed over to a target access network device, wherein the third information is used by the first user plane network element to send the multicast data to the target access network device, wherein
the target access network device does not support multicast, or does not have a tunnel for receiving the multicast data.

14. The communication apparatus according to claim 11, wherein the second information is for requesting the first user plane network element not to send the first signaling to the data network, and the first information comprises at least one of the following: first tunnel information, second tunnel information, second capability information, third tunnel information, or a first rule, wherein
the first tunnel information indicates that an access network device of the first terminal has a tunnel for receiving the multicast data;
the second tunnel information indicates that the data network has a tunnel for sending the multicast data to the first user plane network element;
the second capability information indicates that the data network does not support multicast;
the third tunnel information indicates that the data providing network element has a tunnel for sending the multicast data to the first user plane network element; and
the first rule indicates that the first unicast session is for transmitting the multicast data.

15. The communication apparatus according to claim 14, wherein
the transceiver module is further configured to send fourth information to the first user plane network element after the first terminal is handed over to a target access network device, wherein the fourth information is for requesting the first user plane network element to send the first signaling to the data network, wherein
the target access network device does not support multicast, or the target access network device does not have the second tunnel.

16. The communication apparatus according to claim 11, wherein the second information is for requesting the second session management network element not to send the second signaling to the data providing network element, and the first information comprises at least one of the following: first tunnel information, first capability information, second tunnel information, third tunnel information, third capability information, or a first rule, wherein
the first tunnel information indicates that an access network device of the first terminal has a tunnel for receiving the multicast data;
the first capability information indicates that the access network device of the first terminal supports multicast;
the second tunnel information indicates that the data network has a tunnel for sending the multicast data to the first user plane network element;
the third tunnel information indicates that the data providing network element has a tunnel for sending the multicast data to the first user plane network element;
the third capability information indicates that the data providing network element does not support multicast; and
the first rule indicates that the first unicast session is for transmitting the multicast data.

17. The communication apparatus according to claim 16, wherein
the transceiver module is further configured to send fifth information to the second session management network element after the first terminal is handed over to a target access network device, wherein the fifth information is used by the second session management network element to request a second user plane network element corresponding to the second session management network element to send the multicast data to the first user plane network element or the target access network device, wherein
the target access network device does not support multicast, or does not have a tunnel for receiving the multicast data.

18. The communication apparatus according to claim 17, wherein the fifth information comprises tunnel information on a target access network device side or tunnel information on a first user plane network element side.

19. The communication apparatus according to claim 18, wherein
the transceiver module is further configured to receive the tunnel information on the target access network device side from a mobility management network element for the first terminal or a centralized storage network element.

20. The communication apparatus according to claim 18, wherein
the transceiver module is further configured to receive the tunnel information on the first user plane network element side from the first user plane network element or a centralized storage network element.

21. A communication method, comprising:
determining, by a first session management network element, that a first condition is satisfied; and
sending, by the first session management network element, a first message to a first network element, wherein the first message is for requesting to establish a fourth tunnel, or is for requesting to transmit multicast data through a fourth tunnel, the fourth tunnel is used by a second user plane network element to send the multicast data to a first user plane network element, the multicast data is data on a multicast session that a first terminal device requests to receive, and the first user plane network element is configured to provide the multicast data for the first terminal device, wherein
the first condition comprises one or more of the following:
the first terminal device is in idle mode;
a second unicast session is deactivated, wherein the second unicast session is associated with the multicast session;
a serving access network device of the first terminal device does not support a multicast mode; or
the first session management network element determines to transmit the multicast data in a unicast mode.

22. The method according to claim 21, wherein that the first session management network element determines to transmit the multicast data in a unicast mode comprises:
if a quantity of terminal devices that have accessed the serving access network device of the first terminal device and have joined the multicast session is less than or equal to a quantity threshold, the first session management network element determines to transmit the multicast data in the unicast mode.

23. The method according to claim 21 or 22, wherein the first network element is a second session management network element, the first message comprises fourth tunnel information, and the fourth tunnel information is used by the second session management network element to establish the fourth tunnel.

24. The method according to claim 21 or 22, wherein the first network element is the first user plane network element, the first user plane network element is a unicast user plane network element corresponding to the first session management network element, the first message comprises a second rule, the second rule is used by the first user plane network element to receive the multicast data from the second user plane network element, and the second user plane network element is a multicast user plane network element corresponding to the multicast session.

25. The method according to claim 24, wherein the method further comprises:
receiving, by the first session management network element, a third message from the first user plane network element, wherein the third message is for notifying that the first user plane network element has received the multicast data; and
sending, by the first session management network element, a fourth message, wherein the fourth message is for paging the first terminal device or activating a user plane connection for the second unicast session.

26. A communication method, comprising:
receiving, by a second session management network element, a first message from a first session management network element; and
establishing, by the second session management network element, a fourth tunnel based on the first message; or
requesting, by the second session management network element based on the first message, a second user plane network element to send multicast data to a first user plane network element through a fourth tunnel, wherein
the multicast data is data on a multicast session that a first terminal device requests to receive, the first user plane network element is configured to provide the multicast data for the first terminal device, the first user plane network element is a unicast user plane network element corresponding to the first session management network element, and the second user plane network element is a multicast user plane network element corresponding to the second session management network element.

27. The method according to claim 26, wherein the first message comprises fourth tunnel information, and the fourth tunnel information is used by the second session management network element to establish the fourth tunnel.

28. The method according to claim 27, wherein the method further comprises:
sending, by the second session management network element, a second message to the second user plane network element, wherein the second message comprises the fourth tunnel information.

29. The method according to claim 28, wherein the second message further comprises a third rule, and the third rule is for configuring the second user plane network element to send the multicast data to the first user plane network element.

30. A communication apparatus, comprising a module configured to perform the communication method according to any one of claims 21 to 29.

31. A communication apparatus, wherein the communication apparatus comprises a processor, and the processor is coupled to a memory, wherein
the memory is configured to store a computer program; and
the processor is configured to execute the computer program stored in the memory, to enable the communication apparatus to perform the communication method according to any one of claims 1 to 10 or any one of claims 21 to 29.

32. A computer-readable storage medium, wherein the computer-readable storage medium comprises a computer program or instructions; and when the computer program or the instructions is/are run on a computer, the computer is enabled to perform the communication method according to any one of claims 1 to 10 or any one of claims 21 to 29.

33. A computer program product, wherein the computer program product comprises a computer program or instructions; and when the computer program or the instructions is/are run on a computer, the computer is enabled to perform the communication method according to any one of claims 1 to 10 or any one of claims 21 to 29.
